# EUROPÄISCHE PATENTSCHRIFT

(11) **EP 0 349 624 B1**
(45) Veröffentlichungstag und Bekanntmachung des Hinweises auf die Patenterteilung: **01.03.1995**
(21) Anmeldenummer: 89900581.3
(22) Anmeldetag: 22.12.1988
(51) Int. Cl.: F16F 15/12, F16H 47/02

(54) **EINRICHTUNG ZUR GERÄUSCH- UND SCHWINGUNGSMINDERUNG, INSBESONDERE BEI EINEM STUFENLOSEN KRAFTFAHRZEUGGETRIEBE MIT LEISTUNGSVERZWEIGUNG**
DEVICE FOR SUPPRESSING NOISE AND VIBRATIONS, IN PARTICULAR IN CONTINUOUSLY VARIABLE TRANSMISSIONS WITH POWER SPLIT IN MOTOR VEHICLES
AGENCEMENT AMORTISSEUR DE BRUIT ET DE VIBRATIONS, NOTAMMENT POUR TRANSMISSIONS VARIABLES ET A DIVISION DE PUISSANCE DE VEHICULES A MOTEUR

(30) Priorität: 22.12.1987 DE 3743465
(43) Veröffentlichungstag der Anmeldung: 10.01.1990
(73) Patentinhaber: Meyerle, Michael, D-88074 Meckenbeuren (DE)
(72) Erfinder: Meyerle, Michael, D-88074 Meckenbeuren (DE)
(86) Internationale Anmeldenummer: DE8800780
(87) Internationale Veröffentlichungsnummer: WO8905931

(56) Entgegenhaltungen:
- DE-A- 2 161 400
- DE-A- 2 716 960
- DE-A- 3 125 119
- DE-A- 3 528 175
- FR-A- 2 518 203

## Beschreibung

Die Erfindung betrifft eine Einrichtung zur Geräusch- und Schwingungsminderung, insbesondere bei stufenlosen Kraftfahrzeuggetrieben, die mit Leistungsverzweigung arbeiten.

Bei Getrieben dieser Art wird die Eingangsleistung innerhalb des Getriebes aufgeteilt in einen Leistungszweig, der über den stufenlosen Wandler führt und einen weiteren über Zahnräder fließenden Leistungszweig. Beide Leistungsflüsse werden über ein Summierungsgetriebe wieder aufsummiert. Der stufenlose Wandler kann als hydrostatischer Wandler oder als mechanischer Wandler in verschiedenen Ausführungsformen Anwendung finden. Getriebe dieser Art besitzen den Nachteil zu hoher Geräuschentwicklung, insbesondere für den anspruchsvollen Einsatz im PKW oder in Omnibussen. Ein derartiges getriebe gemäß dem Oberbegriff der Ansprüche 1 und 2 ist aus der DE-A-2 161 400 bekannt.

Der Erfindung liegt die Aufgabe zugrunde, eine Einrichtung zu schaffen, die es ermöglicht, eine weitgehende, bevorzugt elastische Entkoppelung des schwingungs- und geräuschintensiven stufenlosen Wandlers zu erzielen, um somit das Geräuschverhalten auf ein Mindestmaß zu senken.

Die Aufgabe wird durch die in Anspruch 1 und 2 aufgeführten Merkmale gelöst. Weitere vorteilhafte Ausgestaltungen gehen aus den Unteransprüchen und der Beschreibung hervor.

Die Erfindung wird an Ausführungsbeispielen anhand von Zeichnungen erläutert. Es zeigen:
Figur 1 den Längsschnitt eines hydrostatisch-mechanischen Leistungsverzweigungsgetriebes mit eingangsseitigem außen angeordnetem Torsionsdämpfer für den stufenlosen hydrostatischen Wandler, sowie ein dem stufenlosen Wandler nachgeschaltetes Summierungsplanetengetriebe zur Aufsummierung der hydraulischen und mechanischen Leistung
Figur 2 einen Teilschnitt "x" durch den dem Wandlergetriebe vorgeschaltetem Torsionsdämpfer
Figur 2a einen Teilschnitt des Torsionsdämpfers ähnlich Figur 2, jedoch mit höher überstehenden Mitnehmern 195 und 196 an den beiden Schwungringen
Figur 4 eine Ausführungsform eines Torsionsdämpfers mit Schwungring zur Dämpfung von Biege-Drehschwingungen
Figur 6 eine Ausführungsform des Torsionsdämpfers mit zwei Schwungringen, die elastisch mit den Primär- und Sekundärgliedern verbunden sind
Figur 7 eine weitere Ausführung des Torsionsdämpfers mit innenliegendem Schwungrad, sowie einer Drehmomentabstützeinrichtung über einen nach innen und nach außen verzahnten zwischengelagerten elastischen Ring für elastische Drehmomentabstützung und einem separaten Lagerring mit zylindrischen Querschnitt, der zwischen kegelförmigen Lagerflächen eingebaut ist für radiale und axiale Lagerung des wandlers
Figur 8 eine Ausführungsform eines Torsionsdämpfers mit einem mit der Antriebswelle des stufenlosen Wandlers starr verbundenem Schwungrad, das über einen elastischen Ring an das Primärglied bzw. Eingangsglied anvulkanisiert ist
Figur 9 ein Drehmomentstützlager, das in das Getriebegehäuse eingesetzt wird und über ein elastisches Glied in eine zylindrische Ausnehmung des Wandlergehäuses eingreift, das vorzugsweise zweifach gegenüberliegend angeordnet ist
Figur 10 eine weitere Ausführungsform des Drehmomentstützlagers ähnlich der Ausführung nach Figur 9, jedoch mit zusätzlichen Reibdämpfungselementen
Figur 11 einen Lagerring als Blechprägekonstruktion, der gleichzeitig die Funktion eines Drehmomentstützlagers übernimmt durch entsprechende Mitnahmezungen, die in Ausnehmungen des Getriebegehäuses und des Wandlergehäuses eingreifen.
   Dieser Lagerring ist gleichzeitig mit federnd ausgebildeten Zwischenstegen zwischen dem äußeren und dem inneren Zentrierdurchmesser ausgeformt
Figur 12 eine weitere Ausführungsform des Torsionsdämpfers mit Gummi- und Viskosedämpfeinrichtung
Figur 13 eine Ausführungsform eines Radiallagers des Wandlergehäuses zum Getriebegehäuse mit einem zusätzlichen Reibring für Reibdämpfung und einer Drehmomentabstützeinrichtung
Figur 14 eine einfache Ausführung eines Torsionsdämpfers zwischen Antriebswelle des Wandlers und der Getriebeantriebswelle in der Art zweier aneinandervulkanisierter Verbindungsflansche
Figur 15 Schnitt durch einen elastischen Radiallagerring zwischen Getriebegehäuse und dem Wandlergehäuse, der aus einem äußeren und einem inneren Metallring, die zusätzlich für die Drehmomentabstützung Mitnehmer besitzen, die in Ausnehmungen des Getriebegehäuses und des Wandlergehäuses eingreifen, wobei beide Metallringe über einen einvulkanisierten Gummisteg elastisch miteinander verbunden sind
Figur 16 eine Ausführung eines Radiallagers mit Drehmomentabstützung als Vulkanisation mit einem Metallring.
Figur 17 eine weitere Ausführungsform des Torsionsdämpfers mit spezieller Reibdämpfungseinrichtung durch eine drehmomentabhängige Reibkraftverstärkung
Figur 18 zeigt einen Teilschnitt "Z" des Torsionsdämpfers 170 nach Figur 17
Figur 19 eine Ausführungsform des Torsionsdämpfers ähnlich wie Ausführung nach Figur 17 jedoch mit Schraubenfederdämpfer Es gibt keine Figur 3.

Durch die erfingungsgemäße Ausbildung von Einrichtungen zur Torsionsdämpfung in verschiedenen Ausführungsformen zur Drehschwingungsminderung bzw. -beseitigung, insbesondere der Triebwellen des stufenlosen Wandlers, sowie die erfindungsgemäße Gestaltung verschiedener Formen von geräusch- und schwingungsmindernden bzw. -dämpfenden Lagereinrichtungen für den stufenlosen Wandler wird erreicht, daß für nahezu jede Art von leistungsverzweigten Getrieben eine nahezu optimale Lösung zur Beseitigung des Geräusch- und Schwingungsproblemes geschaffen wird. Je nach fahrzeugspezifischen Bedingungen bzw. Gegebenheiten ist eine weitgehende Auswahl zur Beseitigung der genannten Probleme möglich.

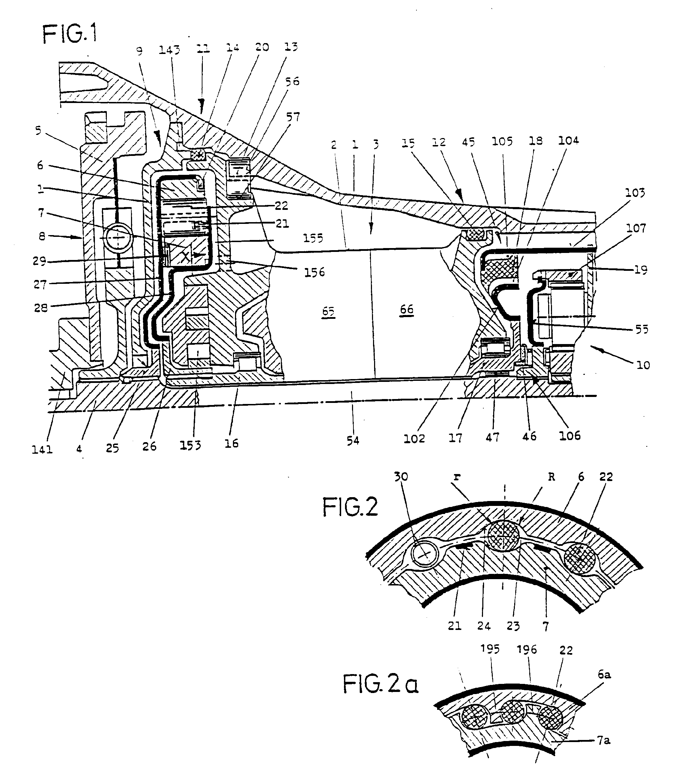

In Figur 1 wird in einem teilweisen Längsschnitt ein stufenloses hydrostatisch-mechanisches Leistungsverzweigungsgetriebe dargestellt, bei dem die Leistung eingangsseitig aufgeteilt wird in einen hydraulischen und einen mechanischen Zweig, wobei beide Leistungszweige ausgangsseitig wieder aufsumiert werden in einem Summierungsgetriebe 10 und über weitere Getriebeglieder zur Abtriebswelle weiterfließen. Der hydrostatische Wandler 3 ist bei dieser Ausführungsform elastisch vom Getriebegehäuse 1 entkoppelt durch entsprechende elastische Lagerelemente 14 und 15, sowie einer Drehmomentabstützeinrichtung 13. Zur Drehschwingungsdämpfung ist ein im Getriebegehäuse 1 angeordneter Torsionsdämpfer 9 vorgesehen. Dieser Torsionsdämpfer 9 besteht aus zwei Schwungringen 6 und 7, die übereinander angeordnet sind und elastisch über entsprechende Glieder 22 miteinander in Drehverbindung stehen. Der erste Schwungring 6 ist mit der Antriebswelle 4 über einen Zwischenflansch 25 fest verbunden. Das zweite Schwungrad 7 ist über ein Sekundärglied 28 und einem Zwischenflansch 26 mit der Antriebswelle 16 des hydrostatischen Wandlers 3 verbunden. Die elastischen Glieder 22 sind zylinderförmig ausgebildet und lose in Ausnehmungen 23 der beiden Schwungräder 6 und 7 angeordnet, wobei die Mitnahmeflächen 24 der Ausnehmungen 23 mit einem Radius R ausgebildet sind, der größer ist als der Radius r der elastischen Dämpfungsglieder 22. Es wird hierdurch erreicht, daß ein progressiver Kraftanstieg über dem relativen Verdrehwinkel beider Schwungräder 6 und 7 zueinander erzielt wird, was eine gezielte Anpassung an die Dämpfungsanforderungen ermöglicht. Zur weiteren Verbesserung der Schwingungsdämpfung ist ein Reibring 29 eingebaut, der bei dieser Ausführungsform des Torsionsdämpfers 9 zweckmäßigerweise im sekundär angeordneten Schwungrad 7 und dem Primärteil bzw. Eingangsglied 27 unter einer gewissen Federkraft eingespannt ist, erreicht. Das Primärglied 27 und das Sekundärglied 28 werden über Federn 30, die in Ausnehmungen der beiden Schwungräder 7 und 6 untergebracht sind, axial zusammengehalten, wobei gleichzeitig der Reibring 29 mit entsprechender Federkraft an das Schwungrad 7 angepreßt wird. Das mit der Antriebswelle 4 über einen Flansch 25 verbundene Eingangsglied 27, sowie das mit der Eingangswelle 16 des stufenlosen Wandlers 3 über einen Flansch 26 verbundene Ausgangsglied 28 sind jeweils als Blechprägeteile ausgebildet, die jeweils Mitnehmer 20 bzw. 21 besitzen, die in Ausnehmungen des entsprechenden Schwungrades 6 bzw. 7 eingreifen. Der Drehschwingungsdämpfer 9 kann auf sehr wirtschaftliche Weise hergestellt werden, da die Vorzüge der modernen Sintertechnik für die Herstellung der beiden Schwungräder 6 und 7 und der Blechtechnik für die Herstellung des Eingangsgliedes 27 und des Ausgangsgliedes 28 voll ausgeschöpft werden können.

Anstelle der elastischen zylindrischen Dämpfungselemente 22 können auch andersförmige, z.B. viereckige Glieder mit entsprechend ausgebildeten Funktionsflächen an den beiden Schwungrädern 6 und 7 Anwendung finden hinsichtlich optimaler Federcharakteristik.

Wie in Figur 2a dargestellt, ist es möglich, in ansich bekannter Weise die Mitnehmer 195 und 196 der beiden Schwungringe höher auszubilden gegenüber der Ausführung nach Figur 2, so daß die zylindrischen Dämpfungselemente 22 nahezu über ihre gesamte Durchmesserhöhe umgriffen werden, wodurch niedrigere spezifische Belastungsverhältnisse für die Gummielemente 22 möglich sind.

Je nach den Anforderungen der Schwingungs- bzw. Geräuschdämmung und den jeweiligen Gegebenheiten bezogen auf die Art des Antriebsmotors - Anzahl der Zylinderzahl des Antriebsmotors - und der jeweiligen produktspezifischen Marktforderung bzw. Marktgrenzen kann der Torsionsdämpfer zur Optimierung der Geräusch- und Schwingungsdämpfung verschiedenartig ausgelegt werden. Wie in Figur 1 dargestellt, ist dem im Getriebe angeordneten Torsionsdämpfer 9 ein weiterer, außerhalb des Getriebes zwischen dem Schwungrad 5, der mit dem Verbrennungsmotor direkt verbunden ist und der Antriebswelle 4 ein weiterer Torsionsdämpfer 8 vorgeschaltet. Der Torsionsdämpfer 8 ist direkt mit der Antriebswelle 4 und einem Glied 107 des dem Wandlergetriebe 3 nachgeordnetem Summierungsgetriebes 10 verbunden. Es werden damit Drehschwingungen des mechanischen Getriebes gedämpft. Gleichzeitig ist dieser Torsionsdämpfer 8 mit einem zweiten Schwungrad 6 des im Getriebe angeordneten Torsionsdämpfers 9 verbunder, wodurch zusätzlich der Vorteil eines Zweimassenschwungradsystems erzielt wird. Das weitere Schwungrad 7 dient dafür, die Ungleichförmigkeit der Antriebswelle 16 des stufenlosen hydrostatischen Wandlers 3 auszugleichen. Über die Dämpfungselemente 22 zwischen den beiden Schwungrädern 6 und 7 ist eine nahezu optimale Abisolierung der Drehschwingungen auf der Antriebsseite des Getriebes gewährleistet. Der Schwingungsdämpfer 8 kann unter Umständen ganz entfallen, wobei das Schwungrad 5 direkt mit der Antriebswelle 4 starr verbunden ist. Damit sind Masse 5 und Masse 6 eine gemeinsame Masse, sodaß der Torsionsdämpfer als zwei-Massenschwungradsystem als weitere Alternatieve arbeitet.

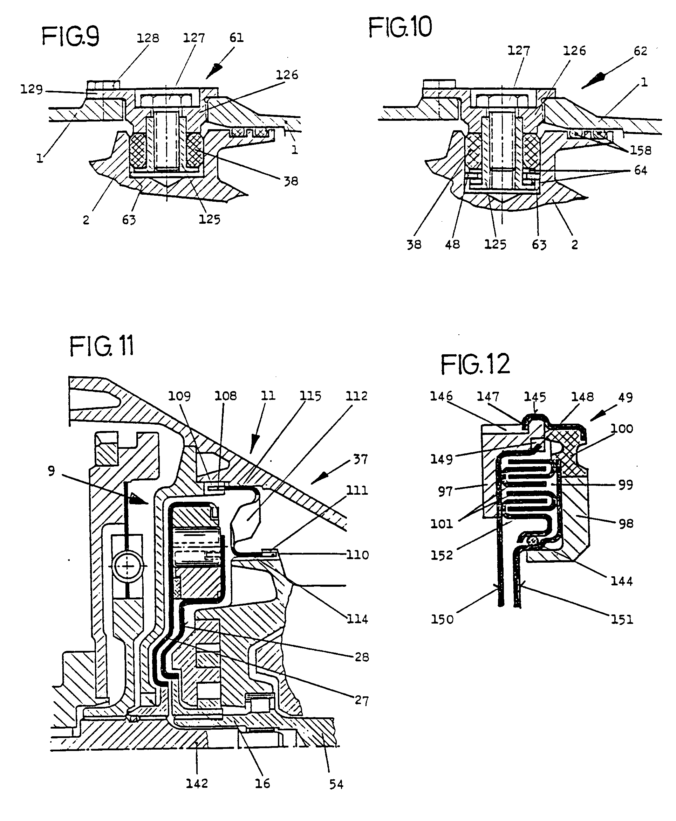

In manchen Anwendungsfällen ist es ausreichend, nur einen im Getriebe angeordneten Torsionsdämpfer vorzusehen, wobei zweckmäßigerweise das Sekundärglied bzw. Abtriebsglied 28 sowohl mit der Eingangswelle 16 des stufenlosen Wandlers 3 als auch mit dem mechanischen Getriebe bzw. Summierungsgetriebe 10 verbunden ist, wobei die Antriebswelle 4 und die Welle 54, wie in Fig. 11 dargest., voneinander getrennt sind.

Zur Drehmomentabstützung des Wandlergehäuses 2 zum Getriebegehäuse 1 ist eine Einrichtung mit elastischen Zwischengliedern 13 vorgesehen, die in Ausnehmungen 56 des Getriebegehäuses 1 und Ausnehmungen 57 des Wandlergehäuses 2 lose eingelagert sind. Die elastischen Glieder 13 sind bei Ausführung nach Figur 1 zweckmäßigerweise in Zylinderform ausgebildet, wobei die Ausnehmungen 56 und 57 der Gehäuse 1 und 2 entsprechend halbkreisförmig ausgebildet sind.

Die an den beiden Lagerstellen 11 und 12 verwendeten elastischen radialen Lagerelemente 14 und 15 haben bei dieser Ausführung zylindrischen Querschnitt, das heißt sie sind als O-Ringe in handelsüblicher Form hergestellt. Der O-Ring 14 an der vorderen Lagerstelle 11 bildet neben der radialen Lagerung auch eine axiale Fixierung des hydrostatischen Wandlers 3, indem er an einer Seite an einer Deckelfläche des Gehäuseteils 1 axial anliegt und auf der anderen Seite über Gegenflächen des Gehäuses 2 und den elastischen Zwischengliedern 13 für die Drehmomentabstützung elastisch gegen eine Gegenfläche 56 des Gehäuses 1 sich axial abstützt.

Das als O-Ring ausgebildete elastische Lagerglied 15 an der hinteren Lagerstelle 12 des Wandlers 13 ist axial frei.

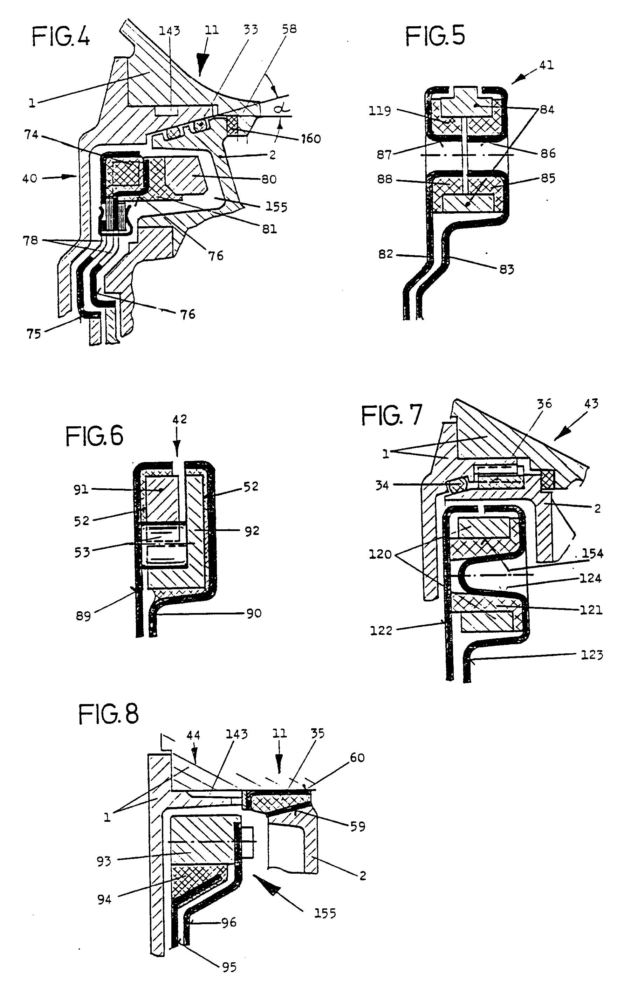

Eine weitere Ausführungsform nach Figur 4 stellt der Torsionsdämpfer 40 dar, der der Ausführungsform 39 nach Figur 3 ähnlich ist, jedoch mit dem Unterschied, daß an das Sekundärglied bzw. dem Ausgangsglied 76 ein Schwungring 80 über ein elastisches Zwischenglied 81 anvulkanisiert ist. Dieser Schwungring 80 dient gleichzeitig zur Drehschwingungsdämpfung und zur Biegeschwingungsdämpfung der Antriebswelle 16 des stufenlosen Wandlers 3.

In Figur 4 ist desweiteren ein Radial- und Axiallager an der Lagerstelle 11 vorgesehen, dessen elastische Glieder O-Ringe 33 darstellen, die zwischen kegelförmige Flächen 58 unter einem Winkel α angeordnet sind. Durch die Anordnung der elastischen Ringe 33 an der Kegelfläche 58 wird neben der radialen Lagerung eine axiale Kraftkomponente erzeugt, die gleichzeitig eine axiale Fixierung des Wandlers 3 gegen das Gehäuse 1 ermöglichen.

Figur 5 zeigt eine weitere Ausführungsform des Torsionsdämpfers 41 mit einem Schwungrad 84, das elastisch über Glieder 85 gegenüber dem Primärglied bzw. Eingangsglied 82 und dem Sekundärglied bzw. Ausgangsglied 83 gelagert ist. Die elastischen Glieder 85 können entweder lose eingelegt werden in entsprechende Mitnehmer 87 und 86 der Eingangs- und Ausgangsglieder 82, 83, die in entsprechende Ausnehmungen 119 bevorzugt in zylindrischer Form des Schwungrades 84 eingreifen. Das Schwungrad 84 kann ebenfalls kostengünstig als Sinterteil hergestellt werden. Die beiden Eingangs- und Ausgangsglieder 82 und 83 sind einfache, wirtschaftlich herstellbare Blechprägeteile.

Ein Torionsschwingungsdämpfer 42 nach Figur 6 zeichnet sich dadurch aus, daß ein Schwungring 91 an ein Primärteil 89 und ein zweiter Schwungring 92 an ein Sekundärteil 90 anvulkanisiert ist, wodurch über die Vulkanisation 52 an den Primär- und Sekundärgliedern 89 und 90 bereits eine elastische Abisolierung gegeben ist. Innerhalb der beiden Schwungmassen bzw. Schwungringe 91 und 92 sind elastische Mitnahmeglieder 53 zur Drehmomentmitnahme angeordnet, die ähnlich der Torsionsdämpferausführung 9 nach Figur 1 ausgebildet sein können. Nicht dargestellte Federelemente, z.B. Zugfedern in entsprechenden Ausnehmungen der beiden Schwungräder 91, 92, wie z.B. bei Ausf. 9 Fig.2, verbinden die Glieder des Torsionsdämpfers 42 in axialer Richtung.

Eine Ausführung des Torsionsdämpfers 43 ist ähnlich der Ausführung 41 nach Figur 7, wobei ein Schwungrad 120 über elastische Dämpfungsglieder 121 an einem Eingangsglied 122 und einem Ausgangsglied 123 gelagert ist. Die elastischen Dämpfungsglieder 121 werden hier zweckmäßigerweise lose auf Mitnehmerzapfen 124, des als Blechprägeteil ausgebildeten Eingangsgliedes 122 und des Ausgangsgliedes 123 aufgesetzt. Sie greifen von beiden Seiten abwechselnd in bevorzugt zylindrische Ausnehmungen 154 des Schwungrades 120. Auch hier kann die Sinter- und Blechtechnik Anwendung finden.

Desweiteren ist in Figur 7 für die Drehmomentabstützung des Wandlers 3 ein elastischer, nach innen und nach außen verzahnter Ring 36 vorgesehen, der mit seinen Zähnen bzw. Ausnehmungen nach außen in Ausnehmungen des Gehäuses 1 und nach innen in Ausnehmungen des Gehäuses 2 des Wandlers 3 eingreift. Als elastisches Radial- und Axiallager für das Wandlergehäuse 2 dient ein elastischer Ring 34 mit zylindrischem Querschnitt, der zwischen Kegelfläohen des Gehäuses 1 und des Gehäuses 2 angeordnet ist.

In Figur 8 wird ein Torsionsschwingungsdämpfer 44 gezeigt mit einem Schwungrad 93, das starr über ein Abtriebsglied 96 mit der Eingangswelle 16 des hydrostatischen Wandlers 3 verbunden ist. Das Eingangsglied 95 ist über ein elastisches Zwischenglied 94 mit dem Schwungrad 93 verbunden, wobei das elastische Zwischenglied 94 eine Vulkanisation zwischen den Gliedern 95 und 93 darstellt. Es handelt sich hier ebenfalls um eine sehr kostengünstige Torsionsdämpferausführung, wobei die Glieder 95 und 96 ebenfalls als Blechprägeteile herstellbar sind.

Zur Drehmomentabstützung und gleichzeitig axialen Fixierung des Wandlers 3 dient, wie in Fig. 9 dargest., einein das Gehäuse 1 von außen her einsetzbare Einrichtung 61 mit einem elastischen Element 38, das in eine zylindrische Ausnehmung des Wandlersgehäuses 2 eingreift. Diese Drehmomentabstützeinrichtung 61 besteht aus einer Buchse 125 auf der der elastische Körper 38 in Form eines Ringes sitzt und gegen einen Träger 126 über eine Schraube 127 axial zusammengepresst wird. Träger 126 und Buchse 125 sind so abgestimmt, daß im zusammengeschraubten Zustand über die Schraube 127 der elastische Ring 38 gegen die zylindrische Ausnehmung 63 des Wandlergehäuses 2 aufweitet und sich darin einspannt. Je nach Ausbildung des elastischen Ringes 38 kann eine mehr oder weniger große elastische Spannung erzeugt werden, die in Abstimmung mit den zulässigen Lebensdauerwerten und den auftretenden Schwingungsverhältnissen eine weitgehende Optimierung der elastischen Abkoppelung bzw. Schwingungsisolierung des Wandlers 3 gegenüber dem Getriebegehäuse 1 ermöglichen. Der Träger 126 des Drehmomentabstützlagers 61 kann in das Gehäuse 1 eingeschraubt werden oder als Flanschelement 129 mit mehreren Einzelschrauben 128 eingesetzt werden. Bei der letzten Ausführung ist ein geringerer Fertigungsanspruch an die Genauigkeit am Gehäuse 1 erforderlich, da die Drehmomentabstützeinrichtung 61 im Wandlergehäuse 2 eingesetzt werden kann vor Befestigen der Einrichtung über die Schrauben 128 am Getriebegehäuse 1.

Die Drehmomentabstützung 62 nach Figur 10 entspricht der Ausführung 61 nach Figur 9, jedoch mit dem Unterschied, daß zusätzlich Reibdämpfungselemente 48 und 64 vorgesehen sind, die in Form von Reibringen durch Federkraft über die elastischen Dämpfungskörper 38 auf der Buchse 125 gelagert sind.

Die inneren Reibringe 64 sind auf der Buchse 125 zentriert, die äußeren Reibringe 48 sind in der Ausnehmung 63 des Wandlergehäuses zentriert. Bei drehmomentabhängiger Verdrehung des Wandlergehäuses 2 wird die Reibscheibe 48 gegen die Reibscheibe 64 verschoben, was eine entsprechende Reibdämpfung bewirkt.

In Figur 11 ist eine Radiallagereinrichtung dargestellt mit einem elastischen Blechformring 37, der im Querschnitt in Z-ähnlicher oder U-ähnlicher oder anderer Form ausführbar ist. Dieser elastische als Blechprägeteil ausgebildete Formring 37 dient zur Zentrierung und elastischen Lagerung, sowie zur Drehmomentabstützung des Wandlergehäuses 2 gegenüber dem Getriebehäuse 1. Zur Drehmomentabstützung dienen Mitnehmer 108 am äußeren Zentriedurchmesser 115 des Formringes 37, die in Ausnehmungen 109 des Gehäuses 1 eingreifen, sowie Mitnehmer 110 am inneren Durchmesser 114 des Formringes 37, die in Ausnehmungen 111 des Wandlergehäuses 2 eingreifen. Auch eine axiale Abstützung ist gegebenenfalls in eine Richtung möglich. Hinsichtlich einer guten Verdreh-Elastizität dienen entsprechend geformte Stege 112 zwischen dem äußeren Zentrierdurchmesser 115 und dem inneren Zentrierdurchmesser 114. Der Zwischensteg 112 ist hier zweckmäßigerweise quergestellt hinsichtlich eines guten, gezielt auslegbaren Federeffektes in Umfangsrichtung gegenüber dem Drehmoment und hoher Steifigkeit in axialer Richtung.

In Figur 12 wird eine weitere Ausführungsform eines Torsionsschwingungsdämpfers dargestellt, der als Gummi-Viskosedämpfer funktioniert. Das Schwungrad 97 wird über einen Gummiring 100, der hier zweckmäßigerweise einvulkanisiert ist, mit einem Sekundär-Schwungrad 98 verbunden. Das Primärglied 97 und das Sekundärglied 98 besitzen labyrinthähnliche Dämpfungsringe 101; 152 als Viskosedämpfeinrichtung. Die Dämpfungsringe 101; 152 sind als Blechprägeteile ausgebildet und an dem Eingangsglied 150 bzw. Ausgangsglied 151, die ebenfalls Blechprägeteile sind, befestigt. Das Eingangsglied 150 kann in das Schwungrad 97 eingepreßt und verdrehgesichert über Mitnehmerlappen 148 und Ausnehmungen 149 werden. Zur elastischen Verbindung beider Schwungräder 97, 98 dient ein anvulkanisierter Blechring 145, dessen Mitnehmer 147 in Ausnehmungen 146 des Primär-Schwungrades 97 verdrehfest und axialfest eingreifen. Durch einen Dichtring 144 wird das sich zwischen den Dämpfungsringen befindliche Viskoseöl bzw. Silikonöl 99 abgedichtet.

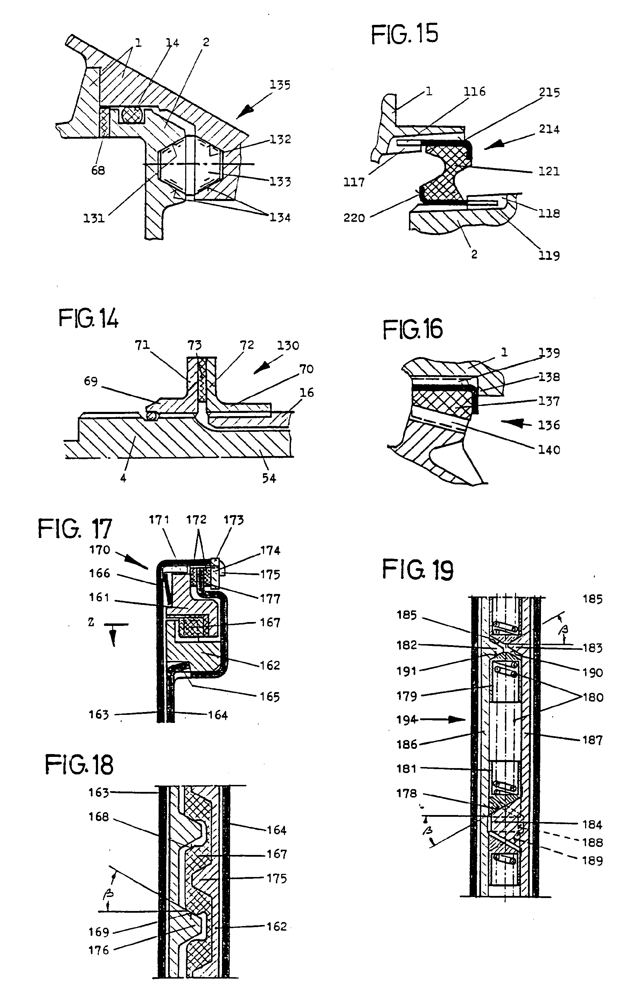

In Figur 13 ist eine elastische Lagerung des Wandlergehäuses 2 gegenüber dem Gehäuse 1 über einen O-Ring 14 dargestellt mit einem Reibring 68, der zur Erzeugung einer Reibdämpfung derart angeordnet ist, daß Axialkräfte des Wandlergehäuses 2 über den Reibring 68 abgestützt werden. Diese Ausführung ist insbesondere für derartige Anwendungen von Vorteil, die eine drehmomentabhängige Axialkraft gegen den Reibring 68 erzeugen, z.B. Axialkräfte, die aus einer entsprechend ausgebildeten Drehmomentstützeinrichtung 135 kommen. Über elastische, beidseitig mit Schrägflächen bzw. Kegelflächen 132 versehene Körper 133 wird eine drehmomentabhängige Axialkraft gegen den Reibring 68 bewirkt. Die elastischen Körper 133 liegen vorzugsweise lose in entsprechend geformten Ausnehmungen des Getriebegehäuses 1 und des Wandlergehäuses 2. Die elastischen Drehmomentstützkörper können je nach spezifischer Belastung verschiedenartig ausgebildet werden, z.B. als Mehreckkörper mit in Umfangsrichtung schräggestellten Flächen, so daß eine gezielte axiale drehmomentabhängige Kraftkomponente erzeugt werden kann.

Als Torsionsdämpfer kann bei weniger anspruchsvollen Anwendungen eine Einrichtung dienen, wie in Figur 14 dargestellt. Der hier verwendete Torsionsdämpfer 130 besteht darin, daß über eine Vulkanisation zwischen einem eingangsseitigen Flansch 71 und einem abtriebsseitigen Flansch 72 eine elastische Verbindung zwischen der Antriebswelle 4 und der Antriebswelle 16 des Wandlergetriebes hergestellt wird.

Ein in Figur 15 dargestellter, als Zentrierring ausgebildeter Dämpfungsring 214, besteht aus einem äußeren Zentrierring 215 und einem inneren Zentrierring 220, die über eine elastische Vulkanisation 121 miteinander verbunden sind. Dieser Dämpfungsring 214 dient auch als Drehmomentabstützung des Wandlergehäuses 2 zum Gehäuse 1. Mitnehmer 116 am äußeren Zentrierring 215 greifen in Ausnehmungen 117 des Gehäuses 1 ein und Mitnehmer 119 des inneren Zentrierringes 220 greifen zur Drehmomentabstützung in entsprechende Ausnehmungen 118 des Wandlergehäuses 2 ein. Die Zentrierringe 215 und 220 sind bevorzugt als Blechprägeteile ausgebildet.

Um eine nach allen Seiten elastische Abkoppelung der mechanischen Getriebeglieder vom stufenlosen Wandler 3 zu erzielen, ist die Abtriebswelle 17 des hydrostatischen Wandlers 3 mit einem Torsionsdämpfer 45 Figur 1 ausgestattet. Die Abtriebswelle 17 des stufenlosen Wandlers 3 besitzt zu diesem Zweck ein, insbesondere als Blechprägeteil ausgebildetes Flanschelement 102, das über ein oder mehrere elastische Glieder 18 mit einem mechanischen Getriebeglied 103 und 19 verbunden ist. Das elastische Glied 18 ist zweckmäßigerweise als Vulkanisation zwischen dem Flanschelement 102 und dem weiteren Getriebeglied 103 ausgebildet. Das elastische Dämpfungsglied 18 kann auch als loses Element zwischen Mitnehmer 104 des Flanschelementes 102 und Mitnehmer 105 des Getriebegliedes 103 angeordnet sein.

Zwischen dem mechanischen Getriebe 10 und der Abtriebswelle 17 ist ein Axiallager 106 angeordnet, das elastische Zwischenelemente 46 besitzt, um eine elastische Abkoppelung zwischen Wandlergetriebe 3 und dem mechanischen Getriebe 10 zu erzielen.

Auch eine radiale Abisolierung der Welle 17 des Wandlergetriebes 3 gegenüber der mit dem mechanischen Getriebe 10 verbundenen Welle 54 ist ein schwingungsdämpfendes bzw. isolierendes Gleitlager 47 eingebaut, das vorzugsweise aus besonderem Dämm-Material, z.B. aus Kunststoff oder einem anderen Dämm-Material oder aus Mehrschichtmaterial besteht.

Das Torsionsschwingungssystem besitzt, wie in Figur 1 dargestellt, drei Schwungmassen 5, 6 und 7, wobei die erste Masse 5 mit der Welle 141 des Antriebsmotors, die zweite Schwungmasse 6 mit der Getriebe-Eingangswelle 4 und über eine Welle 54 mit dem mechanischen Getriebe bzw. Summierungsgetriebe 10 in Triebverbindung steht und die dritte Schwungmasse 7 der Eingangswelle 16 des stufenlosen Wandlergetriebes 3 zugeordnet ist. Zwischen den jeweiligen Schwungmassen 5 und 6 bzw. 6 und 7 sind jeweils elastische Glieder 8 bzw. 22 zugeordnet. Im Hinblick auf eine zusätzliche Reibdämpfung ist es möglich, Reibringe 29 einzubauen, die zwischen einem Eingangsglied 27 und einem Ausgangsglied 28 eines jeweiligen Schwingungsdämpfers liegen und axial über Federkräfte durch die Federn 30, 31 angepreßt werden. Bei bestimmten Anwendungsfällen ist es ausreichend, die dargestellten Torsionsschwingungsdämpfer 9, 40, 41, 42, 43, 44, 49 auch ohne vorgeschaltetem, außerhalb dem Getriebe angeordnetem Schwingungsdämpfer 8 zu verwenden. Dies bedeutet eine gewisse Kosteneinsparung, die in einigen Anwendungsfällen die Schwingungsanforderungen erfüllt.

Um eventuelle Panscharbeit des im Getriebe angeordneten Schwingungsdämpfers zu vermeiden, wird der Rotationsraum 155 ölfrei gehalten, indem ein Luftdruck erzeugt wird und das sich ansammelnde Lecköl durch eine weit unten liegende Öffnung, die mit einem Ölkanal 143 verbunden ist, abgedrückt. Der erforderliche Luftdruck wird derart erzeugt,daß Luft aus dem Getrieberaum über eine Öffnung 156, die über dem Ölspiegel, aber möglichst nah an der Getriebemittelachse liegt, angesaugt wird. Auch übliche Absaugeinrichtungen sind dafür geeignet.

Der Torsionsschwingungsdämpfer Figur 12 ist, wie bereits beschrieben, ein Gummiviskosedämpfer. Er ist relativ wirtschaftlich und kostengünstig herstellbar, da die Dämpfungsringe 101 und 152 als Blechprägeteile herstellbar sind und die als Schwungringe ausgebildeten Primär- und Sekundärglieder 97 und 98 über eine Vulkanisation 100 über einen Blechring 145 miteinander drehfest und flüssigkeitsdicht über einen Verstemmvorgang verbunden sind. Über Mitnehmerzungen 147, die in Ausnehmungen 146 des ersten Schwungrades 97 eingreifen, wird die Drehmomentverbindung beider Schwungradelemente hergestellt. Das Eingangsglied 150 und das Ausgangsglied 151 sind ebenfalls jeweils Blechprägeteile, die über einen Verstemmvorgang mit ihren Schwungringen 97 bzw. 98 verbunden sind. Mitnehmerlappen 148 des Eingangsgliedes 150 greifen in Ausnehmungen 149 des Schwungringes 97 ein zur Drehmomentverbindung. Zur axialen Fixierung sind ebenfalls, nicht dargestellte, Einprägungen vorgesehen. Die Dämpfungsringe 101, 152 sind vorzugsweise durch ein Widerstandsschweißverfahren mit den Gliedern 150 bzw. 151 verbunden. Zur Abdichtung der Viskoseflüssigkeit 99 nach innen, dient ein Dichtungsring 144 zwischen Dichtflächen an den Blechprägeteilen 152 und 151. Der sekundäre Schwungring 98 ist über einen Gummiring 100 mit dem Sekundärglied 151 und dem Verbindungsring 145 zusammenvulkanisiert.

Die Erfindung sieht hinsichtlich einer besonders guten Reibdämpfung des Wandlergehäuses zum Getriebegehäuse ein Lagerelement 32 bzw. 35 mit wenigstens einer kegelförmigen Lager fläche vor, die bevorzugt eine metallische Oberfläche in Form eines Blechprägeringes besitzt. Diesem Lagerelement ist ein Drehmomentstützlager 135, wie in Figur 13 abgebildet, zugeordnet, das das am Wandlergehäuse auftretende Drehmoment elastisch federnd abstützt und, wie bereits beschrieben, gleichzeitig eine axiale Kraftkomponente erzeugt gegen die kegelförmige Oberfläche des Lagerelementes 32 bzw. 35. Das zweite Radiallager an Lagerstelle 12 kann hier einfach mit einem elastischen O-Ring oder Flachring ausgebildet werden ohne axialer Fixierung (siehe Figur 8).

Die elastischen Elemente bestehen hier vorzugsweise aus Elastomer-Mischungen mit besonderer Eigendämpfung, unterschiedlichen Härtegraden und besonderer Verschleißbeständigkeit, insbesondere an den Stellen, an denen ein gewisse Gleitreibung abhängig von den elastisch federnden Bewegungen der zu isolierenden Elemente auftritt.

An den Lagerstellen 11 oder / und 12 sind als Radiallager jeweils ein oder mehrere O-Ringe 14; 15; 33; 158, wie in Figur 1, 4, 7, 9, 10, 13 dargestellt, verwendbar. Bei Anwendung mehrerer O-Ringe an der jeweiligen Lagerstelle ist eine gezielte Anpassung an die jeweiligen Forderungen hinsichtlich der zulässigen Flächenpressung des Elastomers, des Elastizitätsgrades bzw. des Geräuschisolierungsgrades und anderer Forderungen möglich.

Eine Ausführungsform des Torsionsdämpfers 170 nach Figur 17 sieht Schwungringe 161 und 162 vor, die mit feder-elastischen Elementen 167 derart ausgebildet sind, daß bei Relativ-Verdrehung eine aus der Umfangskraft resultierende axiale Kraftkomponente entsteht, die auf Reibelemente 172 wirkt zur Erzeugung einer Reibdämpfung. Zu diesem Zweck besitzt jeder der beiden Schwungringe 161 und 162 in Umfangsrichtung unter einem Winkel β geneigte Funktionsflächen bzw. Schrägflächen 169. Diese Schrägflächen 169 sind an Mitnehmer 176 bzw. 175 der beiden Schwungringe angebracht. Zwischen den Schrägflächen sind Dämpfungselemente 167 in Form von Gummielementen als-Vulkanisation an einer der beiden Schwungringe oder als lose in eingelegte Elemente vorgesehen. Einer der beiden Schwungringe 161 wird durch eine Feder 166 mit einer konstanten Federkraft über einen oder mehrere Reibringe 172 gegen eine Reibfläche 177 des mit dem Gegenschwungring 162 verbundenen Gliedes (Ausgangsglied 164) gedrückt. Dieser Torsionsdämpfer hat den Vorteil, daß nahezu keine Losbrech-Kräfte vorhanden sind, da die Anfangsreibkräfte aus relativ geringen Axialkräften der Feder 166 resultieren, wodurch der bekannte, unerwünschte Slip-Stick-Effekt beseitigt wird. In Reibsystemen ist bekannt, daß dieser Effekt zu unangenehmen Geräuscherscheinungen führen kann.

Für eine hohe Fertigungsstückzahl, z.B. für ein PKW-Getriebe, ist der Torsionsdämpfer 170 kostengünstig, wie in Figur 17 dargestellt, ausführbar. Der äußere Schwungring 161 ist in einem Blechprägeteil 163 axial gegen Reibringe 172 und drehfest gegen eingeprägte Mitnehmer 171 gelagert. Der andere Schwungring 162 ist ebenfalls in einem Blechprägeteile 164 dreh- und achsfest über ebenfalls eingeprägte Mitnehmer 165 fixiert. Der komplett montierte Torsionsdämpfer wird über einen Sicherungsring 174 zusammengehalten, der in einem letzten Prägegang über Mitnehmerlappen 175 fixiert wird.

Bei einer nicht dargestellten Torsionsdämpfer-Ausführung sind die Dämpfungselemente gemäß der Erfindung als kegelförmige Körper 133, wie in Figur 13 dargestellt, ausgeführt. Der Körper 133 besitzt zwei gegeneinander gerichtete Kegeloberflächen 134. Die beiden Schwungringe besitzen hierbei kegelförmige Ausnehmungen 131, 132 wie in Figur 13 aufgezeigt. Die Winkel der Kegelelemente sowie der Ausnehmungen entsprechen dem Winkel β, der den unterschiedlichen spezifischen Dämpfungsbedingungen, insbesondere im Hinblick auf die Reibdämpfung, angepaßt wird.

Der Torsionsdämpfer (194) nach Figur 19 entspricht dem Wirkungsprinzip des Torsionsdämpfers 170 Figur 17, 18. Anstelle des Gummidämpfungselementes 167 werden hier Schraubenfedern 181 angewendet. Hier kann sehr vorteilhaft eine Feder mit geringer Federrate verwendet werden, das heißt ein Torsionsdämpfer mit großem Verdrehwinkel. Die Reibdämpfung ist in der Funktion identisch mit dem Torsionsdämpfer 170 nach Figur 17. Zu diesem Zweck sind Federhülsen 179 und 181 an jedem Ende der Feder 180 vorgesehen. Beide Federhülsen besitzen Ausnehmungen mit in Umfangsrichtung unter einem Winkel β wirkende Schrägflächen 178 bzw. 185, die mit gleich schräg ausgelegten Gegenflächen an Mitnehmern 182 bzw. 184 zusammenwirken. Die Mitnehmer 182 stehen in fester Drehverbindung mit einem Schwungrad 186 und der andere Mitnehmer 184 mit dem anderen Schwungrad 187. Die Federbuchsen 179 bzw. 181 (Federhülsen) sind so ausgebildet und zwischen den beiden Schwungrädern 186 und 187 so gelagert, daß durch die schräge Abstützung eine dem Drehmoment entsprechende bzw. der Federkraft der Federn 180 entsprechende axiale Kraftkomponente auf die Schwungringe 186 und 187 zur Wirkung kommt, wobei einer der Schwungringe 187, sich wie bei Ausführung nach Figur 17 gegen Reibringe 172 abstützt, wodurch infolge der Relativ-Verdrehung beider Schwungringe zueinander über den Reibeffekt die besagte Reibdämpfung zustande kommt. Die Reibkräfte stehen in proportionalem Verhältnis zur Federkraft der Feder 180.

Der Torsionsdämpfer 194 nach Figur 19 erlaubt bei sehr hoher Fertigungsstückzahl auch die Anwendung sehr wirtschaftlicher Fertigungsmethoden, wobei insbesondere die Blech- und Sintertechnik anwendbar ist. Hierbei ist es möglich, die Funktionselemente mit den Schrägflächen - Mitnehmer 184 und 188 - als Blechprägeteile auszuführen. Die Mitnehmer 184 und 188 sind übereinander angeordnet. Die Führungselemente 179 und 181 für die Druckfedern 180 sind entsprechend mit entgegengerichteten schrägen Wirkungsflächen 189 und 178 ausgebildet. Die Führungsbuchse bzw. - element 179 zeigt eine weitere Ausführungsform, wobei die schräge Wirkungsfläche unter dem Winkel β eine Kegelfläche 191 sein kann. Die Wirkungsflächen 185 bzw. 190 an den Mitnehmern 182 bzw. 183 können bei Anwendung der Blechtechnik entsprechend angeprägt werden.

Diese Ausführungsform nach Figur 19 erlaubt eine beliebige Abstimmung auf die fahrzeug- bzw. getriebespezifischen Bedingungen durch entsprechende Festlegung der Federkräfte und der Federsteifigkeit.

Hinsichtlich einer weiteren Geräuschsenkung ist das Wandlergehäuse 2 mit einer geräuschdämmenden Oberflächenschicht versehen.

Anstelle der Bezeichnung Torsionsschwingungsdämpfer" wurde in der Beschreibung und in den Ansprüchen häufig der gängige und gleichbedeutende Ausdruck "Torsionsdämpfer" gebraucht.

Die Erfindung zeichnet sich dadurch aus, daß durch die aufgezeigten Einrichtungen die heute bestehenden Geräusch- und Schwingungsprobleme, vorallem stufenloser Getriebe, insbesondere beim anspruchsvollen Einsatz im PKW-Getriebe, durch beliebige Kombinationen der erfindungsgemäßen Einzeleinrichtungen und gezielter Dimensionierung und Auslegung, optimal gelöst werden können, trotz geringem Kostenaufwand durch die zusätzliche Anwendbarkeit moderner und wirtschaftlicher Fertigungsmethoden.

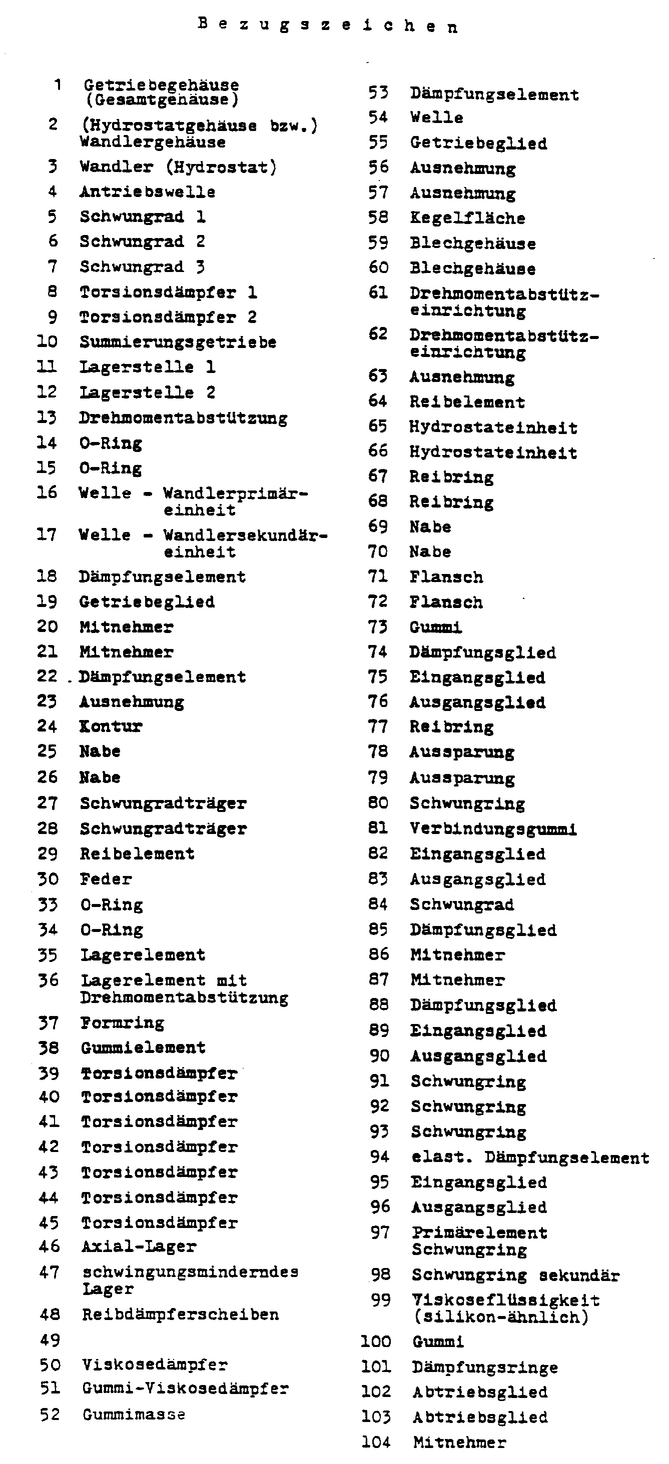

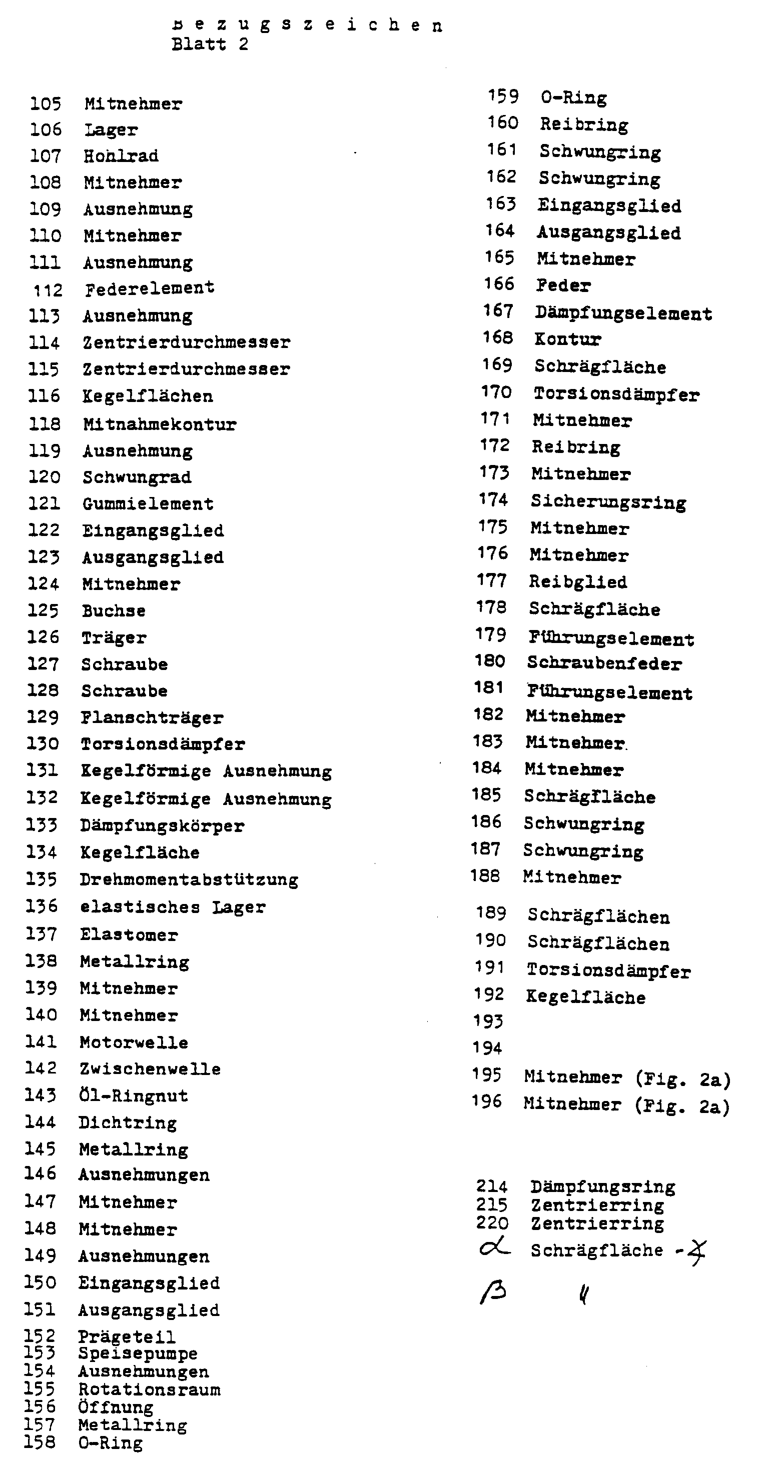

## Patentansprüche

1. Einrichtung zur Geräusch- und Schwingungsninaerung für ein stufenloses Leistungsverzweigungsgetriebe, insbesondere für Kraftfahrzeuge, bei dem die Leistung aufgeteilt wird in zwei Leistungswege, wobei ein Leistungsweg über einen stufelosen Wandler (3) fließt und beide Leistungsflüsse in einem Summiergetriebe (10) wieder aufsummiert werden, wobei der stufenlose Wandler (3) bevorzugt ein hydraustatischer Wandler ist der eine eigene Baueinheit bildet die im Getriebegehäuse (1) Geräusch und schwingungsgedämptt angeordnet ist, derart, daß das Gehäuse (2) des stufenlosen Wandlers über geräuschisolierende Elemente (13,15) zwischen Getriebegehäuse (1) und dem Wandlergehäuse (2) gelagert ist,wobei die Eingangswelle (16) des stufenlosen Wandlers (3) torsions-schwingungsgedampft sind **dadurch gekennzeichnet**, daß
als Torsionsdämpfer ein drei-Massen-Schwungrad-System vorgesehen ist, wobei die erste Masse (Schwungrad 5) mit der Motorwelle 141 verbunden, die Zweite Masse (Schwungrad 6;91;97;161) mit der Eingangswelle (54,55) des Summierungsgetriebes (10) und die dritte Masse (Schwungrad 7;80;92;93;98;162) mit der Eingangswelle (16) des stufenlosen wandlers (3) verbunden ist, und daß zwischen jeder der Schwungmassen ein elastisches Dämpfungselement (8,22;74;94;100;167;180) angeordnet ist.

2. Einrichtung nach dem Oberbegriff des Anspruches 1
**dadurch gekennzeichnet,** daß als Torsionsdämpfer ein Zwei-Massen-Schwungrad-System vorgesehen ist, wobei die erste Masse (Schwungrad 5) mit der Motorwelle (114) und die zweite Masse (Schwungring 80; 93) mit einem Glied des stufenlosen Leistungszweiges, nämlich der Eingangswelle (16) des stufenlosen Wandlers (3) verbunden ist und daß ein Zwischenglied (Eingangsglied 75; 95) mit der ersten Masse und der Getriebeeingangswelle (4) verbunden und mit der zweiten Masse über ein elastisches Element (74; 94) verbunden ist

3. Einrichtung nach Anspruch 1 oder 2
**dadurch gekennzeichnet,** daß als Torsionsdämpfer ein Zwei- oder ein Drei-Massen-Schwungrad-System vorgesehen ist, wobei die erste Masse (Schwungrad 5) mit der Motorwelle (141) verbunden und eine der zweiten oder dritten Masse mit dem Wandlergetriebe (3) oder/und dem Summierungsgetriebe (10) verbunden ist.

4. Einrichtung nach Anspruch 2
**dadurch gekennzeichnet,** daß das Torsionsdämpfungssystem als Zweimassen-Schwungradsystem derart ausgebildet ist, daß die erste Masse (Schwungrad 5) außerhalb des Getriebes auf der Welle (141) des Antriebsmotors sitzt und die zweite Masse (Schwungrad 6; 91; 97;) innerhalb des Getriebes angeordnet und mit der Antriebswelle (4) und einem Glied (54; 55) des Summierungsgetriebes (10) verbunden ist und die Eingangswelle (16) des stufenlosen Wandlergetriebes über ein Sekundärglied (Schwungradträger 28) durch elastische Zwischenglieder (22) ohne zwischengeschaltete Schwungmasse elastisch mit dem zweiten Schwungrad (6; 91; 98) bzw. der zweiten Schwungradmasse in Drehverbindung steht und daß zwischen der ersten und der zweiten Schwungmasse Dämpfungsglieder (8) vorzugsweise außerhalb des Getriebes geschaltet sind.

5. Einrichtung nach Anspruch 1 oder 2
**dadurch gekennzeichnet,** daß ein Torsionsdämpfer (9, 40 bis 44 und 49) vorgesehen ist, der innerhalb des Getriebegehäuses (1) angeordnet ist und daß das Sekundärglied (Schwungradträger 28) des Torsionsdämpfers sowohl mit der Antriebswelle (16) des stufenlosen Wandlers (3) als auch einem oder mehreren Gliedern (54; 107) des Summierungsgetriebes (10) verbunden ist und die Antriebswelle (142) des Getriebes mit dem Primärglied (Schwungradträger 27) des Torsionsdämpfers in Triebverbindung steht.

6. Einrichtung nach Anspruch 1, 2, 4 und 5
**dadurch gekennzeichnet,** daß ein in sich geschlossener Rotationsraum (155) für den Torsionsdämpfer (9, 39, 40, 42, 43, 41, 44) vorgesehen ist, der ölfrei gehalten wird durch Absaugen oder Abdrücken des Öls bzw. Lecköls, z.B. derart, daß in diesem Raum ein drehzahlabhängiger Luftüberdruck erzeugt wird durch den Rotationseffekt, indem eine Öffnung über dem Getriebeölspiegel angebracht ist, durch diese Luft aus dem Getrieberaum angesaugt wird und eine zweite tiefliegende Öffnung, die in Verbindung mit einem Ölkanal (143) steht, vorgesehen ist, durch diese das eindringende Lecköl mit der angesaugten Luft aus dem Rotationsraum (155) in den Getrieberaum entweicht.

7. Einrichtung nach mehreren der Ansprüche 1 bis 6
**dadurch gekennzeichnet,** daß die elastischen Elemente zur Lagerung des Wandlers (3) im Getriebegehäuse (1) an zwei Lagerstellen (11 und 12) zylindrischen Querschnitt aufweisen in Form eines O-Ringes (14, 15; 33 Figur 1 und 4).

8. Einrichtung nach mehreren der Ansprüche 1 bis 7
**dadurch gekennzeichnet,** daß elastische Formstücke (13; 133) vorgesehen sind, die in Ausnehmungen (56, 57; 131, 132) des Getriebegehäuses (1) und Wandlergehäuses (2) lose eingelegt sind und derart ausgebildet sind, daß eine Drehmomentabstützung des Wandlers (3) zum Gehäuse (1) gegeben ist.

9. Einrichtung nach mehreren der Ansprüche 1 bis 8
**dadurch gekennzeichnet,** daß der stufenlose Wandler (3) über einen ersten umlaufenden oder geteilten elastischen Ring bevorzugt mit zylindrischem Querschnitt (O-Ring 14) radial und axial fixiert wird derart, daß dieser axial gegen den federnden Druck der drehmomentbelastbaren elastischen Glieder (13; 133) oder gegen einen anderen in axialer Richtung entgegenwirkenden Kraft, z.B. über Glieder des Summierungsgetriebes (10) und schwingungsdämpfende Lager (46) eingespannt ist (Fig. 1), und daß ein oder mehrere elastische Ringe (14; 15; 33; 158) je Lagerstelle (11; 12) Verwendung finden.

10. Einrichtung nach mehreren der Ansprüche 1 bis 9
**dadurch gekennzeichnet,** daß als Drehmomentabstützung zwischen Wandler (3) und dem Gehäuse (1) ein Formring (36 / Fig. 7) bzw. ein Formkörper (37 / Fig. 11 vorgesehen ist, der nach Art eines Zahnkörpers mit Außen- und Innenverzahnung ausgebildet ist u. elastisch, sowohl in Ausnehmungen des Gehäuses (1) bzw. eines mit dem Gehäuse verbundenen Gliedes u. in entsprechend ausgebildeten Ausnehmungen des Wandlergehäuses (2) eingreifen, wobei z.B. als Axialfixierung ein O-Ring (34), der zwischen Schrägflächen beider Gehäuseteile (1 und 2) zum Erzeugen einer axialen Kraftkomponente eingebaut ist, wobei das Wandlergehäuse (2) mit entsprechender axialer Gegenkraft gegen den O-Ring (34) und gegebenenfalls gegen einen entgegengerichteten Reibring (160) wirkt.

11. Einrichtung nach mehreren der Ansprüche 1 bis 10
**dadurch gekennzeichnet,** daß an einer oder beiden Lagerstellen (11 und 12 nach Figur 4) jeweils ein oder mehrere O-Ringe (33) vorgesehen sind, die gegen eine unter einem Winkel ausgebildeten Kegelfläche (-flächen) (58) wirken, wodurch sowohl eine radiale als auch axiale Fixierung des Wandlergehäuses (2) bewirkt wird.

12. Einrichtung nach mehreren der Ansprüche 1 bis 11
**dadurch gekennzeichnet**, daß das elastische Lagerelement (35) für ein oder beide Lagerstellen (11, 12) aus einem elastischen Gummielement mit anvulkanisierten Metallringen (59 und 60) besteht, wobei vorzugsweise ein Metallring (59) kegelförmig ausgebildet ist zur gleichzeitigen axialen Fixierung des Gehäuses (2) und der andere Blechring (60) zylindrisch ist.

13. Einrichtung nach mehreren der Ansprüche 1 bis 12
**dadurch gekennzeichnet,** daß an jeder der beiden Lagerstellen (11 und 12) jeweils nur ein einfacher O-Ring (14 bzw. 15) Verwendung findet, wobei ein O-Ring (15) axial unbelastet und der andere O-Ring (14) sowohl radial als auch axial nach beiden Richtungen den stufenlosen Wandler (3) fixiert.

14. Einrichtung nach mehreren der Ansprüche 1 bis 13
**dadurch gekennzeichnet,** daß gemäß Figur 9 und 10 ein Drehmomentstützlager (61; 62) vorgesehen ist, das in das Getriebegehäuse (1) eingesetzt und befestigt wird und über ein Gummielement (38) in eine entsprechende Ausnehmung (63) des Wandlergehäuses (2) eingreift und den hydrostatischen Wandler (3) gegen das Gehäuse (1) in Umfangsrichtung und in axialer Richtung fixiert, wobei bevorzugt zwei in Umfangsrichtung gleichmäßig angeordnete Drehmomentstützlager (61; 62) angeordnet sind.

15. Einrichtung nach mehreren der Ansprüche 1 bis 14
**dadurch gekennzeichnet,** daß das Drehmomentstützlager (62) zusätzlich mit Reibdämpfelementen (48; 64) versehen ist, die über den Druck des elastischen Federelementes gegeneinander gepreßt sind, wobei wenigstens ein Reibelement (48) gegenüber dem Wandlergehäuse (2) fixiert und wenigstens ein Reibelement (64) gegenüber dem Getriebegehäuse (1) fixiert ist.

16. Einrichtung nach mehreren der Ansprüche 1 bis 15
**dadurch gekennzeichnet,** daß die elastischen Lagerelemente (14, 15, 32, 33, 36, 34) vorzugsweise aus einem mit hohem Hysterese-Effekt wirkenden Elastomer bestehen mit zusätzlichem Reibdämpgungseffekt.

17. Einrichtung nach mehreren der Ansprüche 1 bis 16
**dadurch gekennzeichnet,** daß ein Reibring (68) vorgesehen ist, der zwischen Getriebegehäuse (1) und dem Wandlergehäuse (2) unter einer gewissen axialen Federkraft vorgespannt ist oder / und daß der Reibring (68) durch eine vom Drehmoment des Wandlergehäuses (2) abhängigen axialen Kraft, z.B. aus der entsprechend ausgebildeten Drehmomentstütze (135) oder einer Axialkraft, die aus Elementen des Getriebes (10) resultiert, angepreßt wird zur Erzeugung einer drehmomentabhängigen Reibdämpfung zwischen Getriebegehäuse (1) und dem Wandlergehäuse.

18. Einrichtung nach mehreren der Ansprüche 1 bis 17
**dadurch gekennzeichnet,** daß der Torsionsdämpfer (9, 39, 40; 41; 42; 43; 44; 45; 49; 50; 51) außerhalb des Getriebes (1) angeordnet ist und einem Schwungrad (5) am Antriebsmotor verbundenen Torsionsdämpfer (8) nachgeordnet ist.

19. Einrichtung nach mehreren der Ansprüche 1 bis 18
**dadurch gekennzeichnet,** daß die Antriebswelle (16) des Wandlers (3) von der Antriebswelle (4) des Getriebes metallisch abgekoppelt ist, dadurch daß, wie in Figur 14 dargestellt, die mit der Antriebswelle (4) verbundene Nabe (69) über ein elastisches Element, insbesondere einem Gummielement (73), mit der mit der Antriebswelle (16) des Wandlergetriebes verbundenen Nabe (70) in Triebverbindung steht, wobei das elastische Element (73) ein an beide Flansche (71 und 72) der beiden Naben (69 und 70) einvulkanisiertes Gummielement ist oder daß das elastische Element (73) ein, wie ansich bekanntes, lose zwischen beide Verbindungselemente (71 und 72) eingelegtes drehschwingungsdämmendes Verbindungsglied darstellt.

20. Einrichtung nach mehreren der Ansprüche 1 bis 19
**dadurch gekennzeichnet,** daß der Torsionsdämpfer (9) aus einem Schwungrad (6), das mit einem Eingangsglied (27) verbunden ist und einem zweiten Schwungrad (7), das mit einem Ausgangsglied (28) verbunden ist, besteht, wobei beide Schwungräder (6 und 7) über elastische, insbesondere aus Gummi bestehende Elemente (22) miteinander schwingungsgedämpft in Drehverbindung stehen,derart, daß diese Gummielemente (22) zylindrisch ausgebildet und in Ausnehmungen (23) beider Schwungräder lagern und daß beide Schwungräder übereinander angeordnet sind.

21. Einrichtung nach mehreren der Ansprüche 1 bis 20
**dadurch gekennzeichnet,** daß der Torsionsdämpfer (9) mit Dämpfungselementen (22) ausgerüstet ist, die mit Funktionsflächen (24) beider Schwungräder (6 und 7) zusammenarbeiten, die derart geformt sind, daß das Drehmoment über den relativen Verdrehweg beider Schwungräder (6 und 7) zueinander progressiv ansteigt, indem z.B. das Dämpungselement (22) zylindrisch ausgebildet ist und die Funktionsflächen (24) der Ausnehmungen (23) der beiden Schwungräder (6 und 7) radiusförmig ausgebildet sind mit einem Radius R der größer ist als der Radius r der zylindrischen Dämpfungselemente (22).

22. Einrichtung nach mehreren der Ansprüche 1 bis 21
**dadurch gekennzeichnet,** daß der Torsionsdämpfer (9) alternativ einen Reibdämpfungsring (29) besitzt, der zwischen einem Eingangsglied (27) und einem Ausgangsglied (Schwungrad 7) über eine Federkraft der Federn (30) gelagert ist zum Erzeugen einer Reibdämpfung.

23. Einrichtung nach mehreren der Ansprüche 1 bis 22
**dadurch gekennzeichnet,** daß ein Torsionsdämpfer vorgesehen ist, der elastische Dämpfungsglieder (74) besitzt, die lose in entsprechend ausgebildete Taschen eines als Blechprägeteil ausgebildeten Eingangsgliedes (75) und einem, ebenfalls als Blechprägeteil ausgebildeten Ausgangsglied (76) des Torsionsdämpfers gelagert sind und daß ein Reibelement (77) zwischen Eingangsglied (75) und Ausgangsglied (76) federbelastet durch eine entsprechend geformte Feder angeordnet ist und daß die Feder vorzugsweise aus Flachmaterial hergestellt ist und in Ausnehmungen (78) des Eingangsgliedes (75) und des Ausgangsgliedes (76) des Torsionsdämpfers eingesetzt ist.

24. Einrichtung nach mehreren der Ansprüche 1 bis 23
**dadurch gekennzeichnet,** daß das Ausgangsglied (79) des Torsionsdämpfers (40), das mit der Eingangswelle (16) des Wandlers (3) verbunden ist über ein zwischenvulkanisiertes Gummielement (81) mit einem Schwungring (80) verbunden ist, insbesondere zum Abbau von Biegeschwingungen, die aus dem Wandlergetriebe (3) resultieren (Figur 4).

25. Einrichtung nach mehreren der Ansprüche 1 bis 24
**dadurch gekennzeichnet,** daß ein Torsionsdämpfer (41) vorgesehen ist, der ein Schwunrad (84) besitzt, das über elastische Glieder (88) des Eingangsgliedes (82) und elastische Glieder (85) des Ausgangsgliedes (83) gelagert ist, wobei vorzugsweise die elastischen Glieder (88 und 85) lose in das Schwungrad (84) und in entsprechend ausgebildete Mitnahmeeinrichtungen (87 und 86) des Eingangsgliedes (82) und des Ausgangsgliedes (83) eingelegt sind, und das Eingangsglied (82) und das Ausgangsglied (83) bevorzugt als Blechprägeteile ausgebildet sind.

26. Einrichtung nach mehreren der Ansprüche 1 bis 25
**dadurch gekennzeichnet,** daß ein Torsionsdämpfer (42) verwendet wird, der mit zwei Schwungringen (91 und 92) ausgestattet ist, wobei der erste Schwungring (91) mit dem Eingangsglied (89) über eine Gummimasse (53) verbunden ist und der zweite Schwungring (92) mit dem Ausgangsglied (90) ebenfalls elastisch über eine Gummimasse (52) verbunden ist und beide Schwungräder (91 und 92) über elastische Dämpfungselemente (53) schwingungsgedämpft in Drehverbindung stehen.

27. Einrichtung nach mehreren der Ansprüche 1 bis 26
**dadurch gekennzeichnet,** daß das Eingangsglied (27) und das Ausgangsglied (28) des Torsionsdämpfers (9) jeweils als Blechprägeteil ausgebildet ist und die jeweils zugeordneten Schwungräder (6 und 7) über spanlos geformte Mitnehmer (20 und 21) miteinander verbunden sind.

28. Einrichtung nach mehreren der Ansprüche 1 bis 27
**dadurch gekennzeichnet,** daß ein Torsionsdämpfer (44) mit einem Schwungrad (93), das mit dem Ausgangsglied (96) metallisch fest verbunden ist und das Eingangsglied (95) über eine elastische Dämpfungsmasse (94) mit dem Schwungrad (93) in Drehverbindung steht, wobei vorzugsweise das Eingangsglied (95) und das Ausgangsglied (96) jeweils als Blechprägeteil ausgebildet sind.

29. Einrichtung nach mehreren der Ansprüche 1 bis 28
**dadurch gekennzeichnet,** daß der Torsionsdämpfer (49) als Viskosedämpfer ausgebildet ist, wobei ein Primärelement (97) mit einem Sekundärelement (98) über wenigstens ein elastisches Element (100) miteinander verbunden sind und ein Raum für Viskoseflüssigkeit bzw. einem Dämpfungsmedium (99). besteht und daß das Primärelement (97) oder / und das Sekundärelement (98) jeweils gegeneinander gerichtete Dämpfungskörper, z.B. in Form von Dämpfungsringen (101, 152) oder Dämpfungsscheiben besitzen.

30. Einrichtung nach mehreren der Ansprüche 1 bis 29
**dadurch gekennzeichnet,** daß die Abtriebswelle (17) des Wandlers (3) mit einer Torsionsdämpfungseinrichtung (45) ausgerüstet ist, derart, daß zwischen zwei Gliedern (102 und 103) der Abtriebswelle (17) des Wandlers (3) eine Abkoppelung der Schwingungen durch ein zwischengelagertes elastisches Element (18) besteht, und daß das elastische Element (18) zwischen den beiden abtreibenden Gliedern (102 und 103) einvulkanisiert ist oder diese elastischen Elemente (18) lose in entsprechende Ausnehmungen bzw. entsprechend geformte Mitnehmer (104 und 105) der beiden abtreibenden Glieder (102 und 103) dazwischengelagert sind und daß zur weiteren Schwingungsminderung zwischen den beiden Gliedern (102, 103) ein nicht dargestelltes Reibdämpfungssystem mit Reibgliedern (77) vorgesehen ist.

31. Einrichtung nach mehreren der Ansprüche 1 bis 30
**dadurch gekennzeichnet,** daß die Abtriebswelle (17) des Wandlers (3) von den übrigen Getriebe-Elementen, wie dem Summierungsgetriebe (10) elastisch abgekoppelt ist, dadurch daß das Axiallager (106) und das Radiallager (47) entsprechend schwingungsgedämpft ausgebildet sind, derart, daß zwischen den beiden Lagerscheiben des Axiallagers (106) wenigstens ein geräuschisolierendes bzw. elastisches Zwischenelement (46) vorgesehen ist und das Radiallager (47) vorzugsweise als Gleitlager aus geräuschdämmendem Material bzw. aus speziellem Mehrschichtmaterial, z.B. Sandwichblech ausgebildet ist.

32. Einrichtung nach mehreren der Ansprüche 1 bis 31
**dadurch gekennzeichnet,** daß dem innerhalb des Getriebegehäuses (1) angeordneten Torsionsdämpfer (9) ein außerhalb des Getriebes zwischen einem ersten Schwungrad (5), das mit der Kurbelwelle des Antriebmotors direkt vorbunden ist und der Antriebswelle (4) ein weiterer erster Torsionsdämpfer (8) vorgeschaltet ist.

33. Einrichtung nach mehreren der Ansprüche 1 bis 32
**dadurch gekennzeichnet,** daß das Gehäuse (2) des Wandlers (3) über ein aus einem Blechprägeteil ausgebildeten elastischen Glied in Form eines Blechringes (37) ausgebildet ist, wobei der Blechring (37) an seinem äußeren Zentrierring (115) und dem inneren Zentrierring (114) jeweils Mitnehmer (108 bzw. 110) besitzt, die in Ausnehmungen (109) des Gehäuses (1) und Ausnehmungen (111) des Wandlergehäuses (2) eingreifen, so daß eine gleichzeitige Radiallagerung und Drehmomentabstützung des Wandlers (3) gegenüber dem Gehäuse (1) gegeben ist.

34. Einrichtung nach mehreren der Ansprüche 1 bis 33
**dadurch gekennzeichnet,** daß der als Blechprägeteil ausgebildete Dämpfungsring (37) zwischen den beiden Zentrierringen (115 und 114) vorzugsweise verschränkt angeprägten Stegelementen (112) mit federnder Wirkung gegenüber dem Drehmoment des Wandlergehäuses (2) besitzt.

35. Einrichtung nach mehreren der Ansprüche 1 bis 34
**dadurch gekennzeichnet,** daß als Lagerung des Wandlergehäuses (2) gegenüber dem Getriebegehäuse (1) ein elastischer Lagerring (214) dient, der einen äußeren Metallring (220) besitzt, die über ein elastisches einvulkanisiertes Gummielement (121) miteinander verbunden sind und daß der äußere Metallring (215) und der innere Metallring (220) jeweils Mitnehmer (116 und 119) besitzen, die jeweils in Ausnehmungen (117 bzw. 118) des Getriebegehäuses (1) bwz. Wandlergehäuses (2) eingreifen, um eine elastische Drehmomentverbindung und Lagerung des Wandlers (3) gegenüber dem Gehäuse (1) herzustellen.

36. Einrichtung nach mehreren der Ansprüche 1 bis 35
**dadurch gekennzeichnet,** daß ein Lagerelement (35) für Radiallagerung des Wandlers (3) wenigstens eine kegelförmige Lagerfläche mit bevorzugt metallischer Oberfläche (157; 59) besitzt und diesem Lagerelemente eine Drehmomenta stützeinrichtung (135 / Fig. 13) mit drehmomentabhängiger Axialkrafterzeugung auf den Wandler (3) zugeordnet ist.

37. Einrichtung nach mehreren der Ansprüche 1 bis 36
**dadurch gekennzeichnet,** daß die elastischen Elemente aus Elastomermischungen bestehen, die besondere Eigendämpfung, unterschiedliche Härtegrade und besondere Verschleißbeständigkeit an Reibstellen besitzen.

38. Einrichtung nach mehreren der Ansprüche 1 bis 37
**dadurch gekennzeichnet,** daß die elastischen Lagerlemente (14; 15; 33; 34; 158) eine verschleißfeste bzw. verschleißmindernde Oberfläche an den betreffenden Stellen besitzen und in verschiedenen Querschnittsformen ausgeführt sind, oder/und daß die Lagerflächen an den entsprechenden Stellen der Gehäuse (1 und 2) eine verschleißverhindernde bzw. -mindernde Oberfläche besitzen durch besondere Oberflächenbehandlung bzw. durch Aufbringung einer speziellen Gleitschicht, oder/und daß die elastischen bzw. schwingungsdämpfenden Lagerelemente in entsprechendes Schmiermittel gebettet sind.

39. Einrichtung nach mehreren der Ansprüche 1 bis 38
**dadurch gekennzeichnet,** daß das Wandlergehäuse (2) mit einer geräuschmindernden Oberflächenschicht versehen ist.

40. Einrichtung nach mehreren der Ansprüche 1 bis 39
**dadurch gekennzeichnet,** daß der Torsionsdämpfer (8; 9; 39; 40; 42) in ansich bekannter Weise mit Druckfedern ausgebildet ist.

41. Einrichtung nach mehreren der Ansprüche 1 bis 40
**dadurch gekennzeichnet,** daß die Welle (17) der Sekundäreinheit (66) des stufenlosen Wandlers (3) mit einer nicht dargestellten Schwungmasse über ansich bekannte elastische Zwischenglieder verbunden ist.

42. Einrichtung nach mehreren der Ansprüche 1 bis 41
**dadurch gekennzeichnet,** daß die Ausgangswelle (17) des stufenlosen Wandlers (3) mit einem das Summierungsgetriebe (10) übergreifenden Getriebeglied (103) über elastische Elemente (18) verbunden ist.

43. Einrichtung nach mehreren der Ansprüche 1 bis 42
**dadurch gekennzeichnet,** daß der Torsionsdämpfer (170; 194 Figur 17, 18, 19) mit Schwungmassen (161;162; 186,187) ausgeführt ist, die jeweils Mitnehmer (176, 175; 182, 183; 184, 188) besitzen, die in Umfangsrichtung unter einem Winkel β geneigte Schrägflächen (169; 190; 185; 189) aufweisen, durch diese bei Relativ-Verdrehung eine drehmomentabhängige axiale Kraftkomponente entsteht, wobei die elastischen Dämpfungselemente (167; 180) als Elastomer- oder als metallische Federelemente in loser Ausführung oder gegebenenfalls als Vulkanisation auf einem der beiden Schwungringe (161, 162; 186, 187) aufgebracht sind oder zwischen die beiden gegeneinander wirkenden Schrägflächen (169; 190; 185; 189) lose in entsprechende Ausnehmungen gelagert sind.

44. Einrichtung nach mehreren der Ansprüche 1 bis 43
**dadurch gekennzeichnet,** daß der Torsionsdämpfer (194) (nach Ausführung Figur 19) mit Dämpfungselementen in Form von Schraubenfedern (180) ausgebildet ist, wobei sich die Schraubenfedern (180) über Führungselemente (179 und 181) gegen Mitnehmer (182; 188) des einen Schwungringes (186) und Mitnehmer (183; 184) des anderen Schwungringes (187) abstützen, und daß die Mitnehmer (182, 183; 184; 188) in Umfangsrichtung schräg gestellte Wirkungsflächen (185, 178; 189, 190) besitzen, die mit entsprechenden Gegenflächen der Führungselemente (179; 181) zusammenarbeiten, derart, daß eine der Federkraft bzw. dem Drehmoment entsprechende axiale Kraftkomponente auf eines oder beide der Schwungräder (186 und 187) erzeugt wird, die direkt oder über ein oder mehrere Zwischenglieder beider Schwungräder lagernde Reibringe abgestützt wird.

45. Einrichtung nach mehreren der Ansprüche 1 bis 44
**dadurch gekennzeichnet,** daß die Mitnehmer (184, 188) oder / und weitere Teile des Torsionsdämpfers (170; 191) zumindest teilweise spanlos herstellbare Bauteile in Form von Blechprägeteilen oder / und Fließpressteilen oder / und Sinterteilen sind.

46. Einrichtung nach mehreren der Ansprüche 1 bis 45
**dadurch gekennzeichnet,** daß der stufenlose Wandler (2) an nur einer Lagerstelle (11) axial nach beiden Richtungen über Dämpfungsglieder (14; 33, 160; 133, 68) fixiert und an der anderen Lagerstelle (12) nach beiden Axialrichtungen frei ist.

47. Einrichtung nach mehreren der Ansprüche 1 bis 46
**dadurch gekennzeichnet,** daß die elastischen Lagerelemente (14, 15, 32, 33, 35) als elastisches Radiallager und als Reibdämpfungselement dienen.

48. Einrichtung nach mehreren der Ansprüche 1 bis 47
**dadurch gekennzeichnet,** daß der stufenlose Wandler (3) über geräuschisolierende Steckverbindungen als hydraulische Leitungsverbindungen mit insbesondere großvolumigen elastischen Verbindungselementen, z.B. O-Ringe als Gummiringe mit dem Steuer- und Regelgerät verbunden ist, und daß die Verstellelemente für den stufenlosen Wandler (3) im Wandlergehäuse (2) integriert sind.

## Claims

1. Apparatus for reducing noise and vibrations of a continuously variable transmission with power split, especially for automotive vehicles, wherein the power is divided in two power paths, one power path passing through a continuously variable drive unit (3) and both power parts being summed up in a summation geartrain (10), the continuously variable-speed drive unit (3) being preferably a hydrostatic unit mounted in the transmission housing (1) with damping of noise and vibrations, the housing of the variable-speed drive unit (2) being rotatably supported on sound filtering elements (13, 15) between the transmission housing (1) and the variable-speed drive unit housing (2), the torsional vibrations of the input shaft (16) of the continuously variable-speed drive unit (3) being damped,
**characterized in that**
the torsion damper comprises a flywheel system with three masses, the first mass (flywheel 5) being connected to the engine shaft (141), the second mass (flywheel 6; 91; 97; 161) being connected to the input shaft (54, 55) of the summation gear (10) and the third mass (flywheel 7; 80; 92; 93; 98; 162) being connected to the input shaft (16) of the continuously variable-speed drive unit (3), and in that an elastic damping element (8, 22; 74; 94; 100; 167; 180) is interposed between each pair of flywheels.

2. Apparatus according to the preamble of claim 1, characterized in that the torsion damper comprises a flywheel system with two masses, the first mass (flywheel 5) being connected to the engine shaft (141) and the second mass (flywheel-ring 80; 93) being connected to a member of the continuously variable power path, the input shaft (16) of the continuously variable-speed drive unit (3) and in that an intermediate element (input member 75; 95) is connected to the first mass and to the transmission input shaft (4) and is connected to the second mass through an elastic element (74; 94).

3. Apparatus according to claim 1 or 2, characterized in that the torsion damper comprises a flywheel system with two or three masses, the first mass (flywheel 5) being connected to the engine shaft (141) and the second or third mass being connected to the variable-speed drive unit (3) and/or to the summation gear (10).

4. Apparatus according to claim 2, characterized in that the torsion damper comprises a flywheel system with two masses, the first mass (flywheel 5) being mounted on the engine shaft (141) outside of the transmission and the second mass (flywheel 6; 91; 97) being housed inside of the transmission and being connected to the driving shaft (4) and to a member (54; 55) of the summation gear and in that the input shaft (16) of the continuously variable-speed drive unit is elastically rotatably connected to the second flywheel (6; 91; 98), respectively to the second inertia through a secondary member (flywheel-carrier 28) by means of intermediate elastic elements (22) without any intermediate inertia and in that damping elements (8) are coupled between the first and the second inertia masses preferably outside of the transmission.

5. Apparatus according to claim 1 or 2, characterized in that said torsion damper (9, 40 to 44 and 49) is located inside of the transmission housing (1) and in that the secondary member (flywheel-carrier 28) of the torsion damper is connected as well to the driving shaft (16) of the continuously variable-speed drive unit (3) as to one or more members (54; 107) of the summation gear (10) and the driving shaft (142) of the transmission is drivably connected to the primary member (flywheel-carrier 27) of the torsion damper.

6. Apparatus according to claims 1, 2, 4 and 5, characterized in that said torsion damper (9, 39, 40, 42, 43, 41, 44) is located inside of a closed revolution volume (155), which is maintained free of oil by suction or by evacuation of oil or of the oil leakages, for example in order to maintain within said volume an air pressure dependent from the rotation speed due to the centrifugal force, an opening being arranged above the oil level through which the air of the inside of the transmission is sucked up and a second opening communicating with the oil channel (143) being arranged at the bottom to drain the oil leakages with the sucked air out of the revolution volume (155) into the transmission.

7. Apparatus according to claims 1 to 6, characterized in that the elastic elements for supporting the variable-speed drive unit (3) in the transmission housing (1) on two bearings (11 and 12) have a cylindrical section shaped as an O-ring (14, 15; 33 figure 1 and 4).

8. Apparatus according to claims 1 to 7, characterized in that elastic blocks (13; 133) are freely placed in grooves (56, 57; 131, 132) of the transmission housing (1) and of the variable-speed drive unit housing (2) and are shaped to support the reaction of the torque of the variable-speed drive unit (3) on the housing (1).

9. Apparatus according to claims 1 to 8, characterized in that the continuously variable-speed drive unit (3) is radially and axially fixed by means of a closed or opened elastic ring having preferably a cylindrical section (O-ring 14), which is axially clamped for example by members of the summation gear (10) through bearings dampening the vibrations (46) for bearing the cyclic thrust pressure of the elastic blocks (13; 133) supporting the torque or another axial force, and in that one or more of said elastic rings (14; 15; 33; 158) are used per bearing (11; 12).

10. Apparatus according to claims 1 to 9, characterized in that the torque reaction member between the variable-speed drive unit (3) and the housing (1) comprises a shaped ring (36 / figure 7) or a shaped block (37 / figure 11) having external and internal teeth similarly to a gear to be elastically inserted into grooves of the housing (1) or of a piece fixed to the housing and corresponding grooves of the variable-speed drive unit housing (2) and, to ensure axial fixing, an O-ring (34) is mounted between conical surfaces of both housings (1 and 2) to generate an axial component, the housing of the variable-speed drive unit (2) thrusting accordingly axially against the O-ring (34) and eventually against an opposite friction ring (160).

11. Apparatus according to claims 1 to 10, characterized in that one or both bearings (11 and 12 according to figure 4) comprise respectively one or more O-rings (33), which cooperate with one or more conical surfaces (58) having an angle α to fix the housing of the variable-speed drive unit (2) as well radially as axially.

12. Apparatus according to claims 1 to 11, characterized in that the supporting element (35) of one or both bearings (11, 12) comprises an elastic rubber element vulcanized on metal rings (59 and 60), one metal ring (59) being preferably conical to fix axially the housing (2) and the other metal ring (60) being cylindrical.

13. Apparatus according to claims 1 to 12, characterized in that each of both bearings (11 and 12) comprises respectively a simple O-ring (14 or 15), one O-ring (15) being not loaded axially and the other O-ring (14) fixing the continuously variable-speed drive unit (3) in both directions, radially and axially.

14. Apparatus according to claims 1 to 13, characterized in that, according to figures 9 and 10, a torque reaction element (61; 62) placed and fixed in the transmission housing (1) is engaged in a corresponding groove (63) of the housing of the variable-speed drive unit (2) for fixing the hydrostatic variable-speed drive unit (3) in the housing (1) in rotation and in axial direction by means of a rubber element (38), preferably two of said torque reaction elements (61; 62) being foreseen and arranged uniformly on the circumference.

15. Apparatus according to claims 1 to 14, characterized in that the torque reaction element (62) comprises also friction damping elements (48; 64) urged against each other by the pressure of the elastic element, at least one friction element (48) being fixed relative to the housing of the variable-speed drive unit (2) and at least one friction element (64) being fixed relative to the transmission housing (1).

16. Apparatus according to claims 1 to 15, characterized in that the elastic support elements (14, 15, 32, 33, 36, 34) are preferably made of elastomer having a high hysteresis to increase the friction dampening.

17. Apparatus according to claims 1 to 16, characterized in that a friction ring (68) is clamped with a predetermined axial force between the housing of the transmission (1) and the housing of the variable-speed drive unit (2) and/or in that the friction ring (68) is applied with an axial force depending from the torque of the variable-speed drive unit (2), for example by means of a specific arrangement of the torque reaction element (135) or by an axial force generated by members of the geartrain (10) to provide a torque dependent friction dampening between the transmission housing (1) and the housing of the variable-speed drive unit.

18. Apparatus according to claims 1 to 17, characterized in that the torsion damper (9, 39, 40; 41; 42; 43; 44; 45; 49; 50; 51) is mounted outside of the transmission (1) and is driven by the engine flywheel (5) through a torsion damper (8).

19. Apparatus according to claims 1 to 18, characterized in that the input shaft (16) of the variable-speed drive unit (3) is not metallically connected to the input shaft (4) of the transmission, since, as shown on figure 14, the hub (69) of the input shaft (4) drives the hub (70) of the input shaft (16) of the variable-speed drive unit through an elastic element, especially a rubber element (73), the elastic element (73) being in particular a rubber element vulcanized on both hubs (71 and 72) or, as known per se, a coupling element for damping torsional vibrations placed freely between both coupling elements (71 and 72).

20. Apparatus according to claims 1 to 19, characterized in that the torsion damper (9) comprises a flywheel (6) connected to an input member (27) and a second flywheel (7) connected to an output member (28), both flywheels being rotatably connected with dampening of vibrations by means of elastic elements (22), particularly made in rubber, said rubber elements (22) being cylindrical and being engaged in grooves (23) of the two concentrically arranged flywheels.

21. Apparatus according to claims 1 to 20, characterized in that the torsion damper (9) comprises damping elements (22) which cooperate with functional surfaces (24) of both flywheels (6 and 7), shaped so that the torque increases progressively during the torsional relative movement of both flywheels (6 and 7), for example by means of cylindrical damping elements (22) and of functional surfaces (24) of the grooves (23) of both flywheels (6 and 7) having a radius R greater than the radius r of the cylindrical damping elements (22).

22. Apparatus according to claims 1 to 21, characterized in that the torsion damper (9) comprises alternatively a friction damping ring (29) clamped between an input member (27) and an output member (flywheel 7) by means of a sprihg force (30) to ensure friction damping.

23. Apparatus according to claims 1 to 22, characterized in that the torsion damper comprises elastic damping elements (74) which are freely mounted in corresponding pockets stamped into the input member (75) made of metal sheet and into the output member (76) of the torsion damper also made of stamped metal sheet and in that a friction element (77) located between the input member (75) and the output member (76) is clamped through a spring which is accordingly shaped and in that the spring is preferably made of flat material and is engaged in grooves (78) of the input member (75) and of the output member (76) of the torsion damper.

24. Apparatus according to claims 1 to 23, characterized in that the output member (79) of the torsion damper (40) connected to the input shaft (16) of the variable-speed drive unit (3) is vulcanized on a flywheel-ring (80) by means of an intermediate element made of rubber (81), principally to reduce flexion vibrations from variable-speed drive unit (3) (fig. 4).

25. Apparatus according to claims 1 to 24, characterized in that said torsion damper (41) comprises a flywheel (84) supported by elastic members (88) of the input member (82) and elastic members (85) of the output member (83), said elastic members being preferably located free in the flywheel (84) and in driving supports (87 and 86) of the input member (82) and of the output member (83) accordingly shaped, the input member (82) and the output member (83)) being preferably made of stamped metal.

26. Apparatus according to claims 1 to 25, characterized in that said torsion damper (42) comprises two flywheel-rings (91 and 92), the first flywheel ring being connected to the input member (89) by means of a rubber block (53) and the second flywheel-ring (92) being also elastically connected to the output member (90) by means of a rubber block (52) and both flywheels (91 and 92) being rotatably connected with dampening of the vibrations through elastic damping elements (53).

27. Apparatus according to claims 1 to 26, characterized in that the input member (27) and the output member (28) of said torsion damper (9) are made of stamped metal sheet and the corresponding flywheels (6 and 7) are connected by coupling parts (20 and 21) shaped without removal of material.

28. Apparatus according to claims 1 to 27, characterized in that said torsion damper (44) comprises a flywheel (93) which is fixedly connected to the output member (96) and in that the input member (95) is rotatably connected to the flywheel (93) through an elastic damper block (94), the input (95) and the output (96) members being preferably made of stamped metal sheet.

29. Apparatus according to claims 1 to 28, characterized in that said torsion damper (49) comprises a viscous damper, a primary element thereof (97) being connected to a secondary element (98) through at least an elastic element (100) and a viscous fluid chamber or damping medium (99) and in that the primary (97) and/or the secondary (98) elements comprises respectively facing damping parts for example rings (101, 152) or damping plates.

30. Apparatus according to claims 1 to 29, characterized in that the output shaft (17) of the variable-speed drive unit (3) comprises a torsion damper (45), for causing decoupling of the vibrations between both parts (102 and 103) of the output shaft (17) of the variable-speed drive unit (3) by means of an interposed elastic element (18) and in that said elastic element (18) is vulcanized on both driving parts (102 and 103) or said elements (18) are interposed freely in corresponding slots or in coupling parts (104 and 105) accordingly shaped into both driving parts (102 and 103) and a damper system, not shown, with friction members (77) further reduces vibrations between both members (102, 103).

31. Apparatus according to claims 1 to 30, characterized in that the output shaft (17) of the variable-speed drive unit (3) is elastically decoupled from the others transmission elements, i.e. the summation gear (10), thereby that the axial bearing (106) and the radial bearing (47) damp vibrations, that at least a sound insulating or elastic intermediate element (46) is located between both axial bearing plates (106) and in that the radial bearing (47) is preferably a bushing made of sound dampening material or of laminated composite material for example sandwich metal sheet.

32. Apparatus according to claims 1 to 31, characterized in that said torsion damper (9) housed in the transmission (1) is connected at its driving side to another primary torsion damper (8) arranged at the outside of the transmission between a first flywheel (5) directly mounted on the engine crankshaft and the input shaft (4).

33. Apparatus according to claims 1 to 32, characterized in that the housing (2) of the variable-speed drive unit (3) surrounds an elastic member made of stamped metal sheet, a metal sheet ring (37) comprising respectively on its external centering ring (115) and on its internal centering ring (114) lugs (108 or 110) which are engaged into grooves (109) of the housing (1) and grooves (111) of the variable-speed drive unit housing (2), to support radially and fix in rotation the variable-speed drive unit (3) in the housing (1).

34. Apparatus according to claims 1 to 33, characterized in that said damping metal sheet ring (37) comprises preferably between both centering rings (115 and 114) alternate skew ribs (112) providing torsional springiness under the torque of the housing (2) of the variable-speed drive unit.

35. Apparatus according to claims 1 to 34, characterized in that an elastic centering ring (214) for supporting the housing (2) of the variable-speed drive unit in the transmission housing (1) comprises an external metal ring (215) and an internal metal ring (220), which are assembled by a vulcanized rubber element (121) and in that the external ring (215) and the internal ring (220) comprise respectively lugs (116 and 119), which are engaged into grooves (117, 118) of the transmission housing (1) and of the housing of the variable-speed drive unit (2), to support and to fix elastically in rotation the variable-speed drive unit (3) in the housing (1).

36. Apparatus according to claims 1 to 35, characterized in that a support element (35) of the radial bearing of the variable-speed drive unit (3) comprises at least a conical bearing surface with preferably an external metallic surface (157; 59) and in that said support element comprises a torque reaction member which exerts an axial force depending from the torque of the variable-speed drive unit (3).

37. Apparatus according to claims 1 to 36, characterized in that the elastic elements are made of elastomer mixture which provide specific dampening characteristics, different hardness and a good resistance to wear.

38. Apparatus according to claims 1 to 37, characterized in that the elastic support elements (14; 15; 33; 34; 158) are provided with a wear resistant external surface or with reduced wear at specific places and are carried out under different section shapes and/or in that the support surfaces at the corresponding places of the housings (1 and 2) are provided with a wear resistant external surface or with reduced wear by means of specific surface treatment respectively by means of coating of lubricant and/or in that the elastic support elements or vibrations dampers are embedded in appropriate lubricant.

39. Apparatus according to claims 1 to 38, characterized in that the housing of the variable-speed drive unit (2) is coated with a sound insulating coating.

40. Apparatus according to claims 1 to 39, characterized in that the torsion damper (8; 9; 39; 40; 42) comprises, as known per se, compression springs.

41. Apparatus according to claims 1 to 40, characterized in that the shaft (17) of the secondary unit (66) of the continuously variable-speed drive unit (3) is connected to a not shown inertia mass by means of intermediate elastic elements which are known per se.

42. Apparatus according to claims 1 to 41, characterized in that the output shaft (17) of the continuously variable-speed drive unit (3) is connected to a transmission member (103) surrounding the summation gear (10) through elastic elements (18).

43. Apparatus according to claims 1 to 42, characterized in that the torsion damper (170; 194 figure 17, 18, 19) comprises inertia masses (161; 162; 186, 187) comprising respectively driving lugs (176, 175; 182, 183; 184, 188) which are provided with inclined surfaces (169; 190; 185; 189) of an angle β in the circumferential direction to generate an axial force depending from the torque during relative rotation, the elastic damper elements (167; 180) made of elastomer or shaped as metallic springs being mounted free or vulcanized on one of both flywheel-rings (161, 162; 186, 187) or freely supported in corresponding grooves between both inclined surfaces (169; 190; 185; 189) facing each other.

44. Apparatus according to claims 1 to 43, characterized in that the torsion damper (194 according to figure 19) comprises damper elements shaped as helical springs (180), said helical springs resting against driving lugs (182; 188) of a first flywheel-ring (186) and against driving lugs (183; 184) of a second flywheel-ring (187) through intermediate guiding elements (179 and 181) and in that the driving lugs (182, 183; 184; 188) comprise circumferentially inclined bearing surfaces (185, 178; 189, 190) which cooperate with corresponding opposite surfaces of the guiding elements (179; 181), so that an axial component of the spring force, which depends from the torque, acts on one or both flywheels (186 and 187) directly or through one or more intermediate parts of the friction rings supporting both flywheels.

45. Apparatus according to claims 1 to 44, characterized in that the driving lugs (184, 188) and/or other parts of the torsion damper (170; 191) are made at least partially in stamped metal sheet without machining and/or are cast pieces and/or are sintered pieces.

46. Apparatus according to claims 1 to 45, characterized in that the continuously variable-speed drive unit (2) is axially fixed in both directions at only one bearing (11) by means of damper elements (14; 33, 160; 133, 68) and is axially movable in both directions at the other bearing (12).

47. Apparatus according to claims 1 to 46, characterized in that elastic bearing elements (14, 15, 32, 33, 35) build elastic radial bearings and friction dampers.

48. Apparatus according to claims 1 to 47, characterized in that the continuously variable-speed drive unit (3) is connected to the control unit by means of sound insulated hydraulic detachable connections comprising particularly voluminous elastic coupling elements for example rubber O-rings and in that the actuator system of the variable-speed drive unit (3) is integral part of the housing of the variable-speed drive unit (2).

## Revendications

1. Dispositif pour réduire le bruit et les vibrations d'une transmission à variation continue et à division de puissance, en particulier pour véhicules automobiles, où la puissance est divisée en deux chemins de puissance, un chemin de puissance passant par un variateur continu (3) et les deux parties de la puissance étant à nouveau réunies dans un train sommateur (10), le variateur continu (3) étant de préférence un variateur hydrostatique formant une unité autonome montée dans le carter de transmission (1) avec amortissement des bruits et des vibrations, le carter du variateur continu (2) étant monté à rotation sur des éléments filtrant les bruits (13, 15) placés entre le carter de transmission (1) et le carter du variateur (2), les bruits et les vibrations de l'arbre d'entrée (16) du variateur continu (3) étant filtrés,
caractérisé en ce que
l'amortisseur de torsion est constitué d'un système de volants à trois masses, dont la première masse (volant 5) est reliée à l'arbre moteur (141), la seconde masse (volant 6; 91; 97; 161) à l'arbre d'entrée (54, 55) du train sommateur (10) et la troisième masse (volant 7; 80; 92; 93; 98; 162) est reliée avec l'arbre d'entrée (16) du variateur continu (3), et en ce qu'un élément amortisseur élastique (8, 22; 74; 94; 100; 167; 180) est interposé entre chaque paire de volants.

2. Dispositif selon le préambule de la revendication 1,
caractérisé en ce que l'amortisseur de torsion est constitué d'un système de volants à deux masses, dont la première masse (volant 5) est reliée à l'arbre moteur (141) et la seconde masse (volant-couronne 80; 93) est reliée à un membre de la branche de puissance à variation continue, l'arbre d'entrée (16) du variateur continu (3), et en ce qu'un élément intermédiaire (élément d'entrée 75; 95) est relié à la première masse et à l'arbre d'entrée de la transmission (4) et est relié à la seconde masse par l'intermédiaire d'un élément élastique (74; 94).

3. Dispositif selon la revendication 1 ou 2,
caractérisé en ce que l'amortisseur de torsion est constitué d'un système de volants à deux ou trois masses, dont la première masse (volant 5) est reliée à l'arbre moteur (141) et la seconde ou la troisième masse est reliée au variateur (3) et/ou au train sommateur (10).

4. Dispositif selon la revendication 2,
caractérisé en ce que l'amortisseur de torsion comporte un système de volants à deux masses, où la première masse (volant 5) est montée sur l'arbre (141) du moteur d'entraînement à l'extérieur de la transmission et la seconde masse (volant 6; 91; 97) est logée à l'intérieur de la transmission et est reliée avec l'arbre d'entraînement (4) et un membre (54; 55) du train sommateur (10) et l'arbre d'entrée (16) du variateur continu est lié élastiquement en rotation avec le second volant (6; 91; 98), respectivement avec la seconde masse d'inertie à travers un membre secondaire (porte-volant 28) au moyen d'éléments intermédiaires (22) élastiques sans interposition de masse d'inertie et que des éléments amortisseurs (8) sont intercalés entre la première et la seconde masse d'inertie de préférence à l'extérieur de la transmission.

5. Dispositif selon la revendication 1 ou 2,
caractérisé en ce que ledit amortisseur de torsion (9, 40 à 44 et 49) est logé à l'intérieur du carter de transmission (1) et que le membre secondaire (porte-volant 28) de l'amortisseur de torsion est relié à la fois avec l'arbre d'entraînement (16) du variateur continu (3) et avec un ou plusieurs membres (54; 107) du train sommateur (10) et l'arbre d'entraînement (142) de la transmission est relié cinématiquement avec le membre primaire (porte-volant 27) de l'amortisseur de torsion.

6. Dispositif selon la revendication 1, 2, 4 et 5, caractérisé en ce que ledit amortisseur de torsion (9, 39, 40, 42, 43, 41, 44) est logé à l'intérieur d'un volume de révolution (155) clos, qui est maintenu libre d'huile par aspiration ou par expulsion de l'huile ou des fuites d'huile, par exemple de manière à maintenir dans ce volume une surpression d'air dépendante de la vitesse de rotation par effet centrifuge, une ouverture étant aménagée au-dessus du niveau de l'huile, par laquelle l'air de l'intérieur de la transmission est aspiré et une seconde ouverture placée en contrebas communiquant avec un passage d'huile (143) permet l'évacuation des fuites d'huile entrant avec l'air aspiré du volume de révolution (155) vers l'intérieur de la transmission.

7. Dispositif selon plusieurs des revendications 1 à 6, caractérisé en ce que les éléments élastiques pour supporter le variateur (3) dans le carter de transmission (1) sur deux paliers (11 et 12) présentent une section cylindrique sous forme d'un joint torique (14, 15; 33, figures 1 et 4).

8. Dispositif selon plusieurs des revendications 1 à 7, caractérisé en ce que des blocs élastiques (13; 133) sont placés libres dans des cavités (56, 57; 131, 132) du carter de transmission (1) et du carter de variateur (2) et sont conformés pour supporter la réaction du couple du variateur (3) sur le carter (1).

9. Dispositif selon plusieurs des revendications 1 à 8, caractérisé en ce que le variateur continu (3) est immobilisé radialement et axialement par un joint élastique fermé ou ouvert avec de préférence une section cylindrique (joint torique 14), monté comprimé axialement, par exemple par des membres du train sommateur (10) à travers des paliers amortisseurs de vibrations (46) pour s'opposer à la pression cyclique des blocs élastiques (13;133) soumis au couple ou à une autre force axiale, et qu'un ou plus desdits joints élastiques (14; 15; 33; 158) sont utilisés pour chaque palier (11; 12).

10. Dispositif selon plusieurs des revendications 1 à 9, caractérisé en ce que le moyen de réaction du couple entre le variateur (3) et le carter (1) est constitué d'une bague moulée (36 / figure 7) ou d'un bloc moulé (37 / figure 11) présentant des dentures extérieures et intérieures à la manière d'un élément denté pour pénétrer élastiquement dans des cavités du carter (1) ou d'une pièce fixée au carter et des cavités correspondantes du carter de variateur (2) et un joint torique (34) monté entre des surfaces coniques des deux carter (1 et 2) pour générer une composante axiale, permet l'immobilisation axiale, le carter de variateur (2) exerçant une poussée axiale correspondante sur le joint torique (34) et éventuellement sur une bague de friction (160) opposée.

11. Dispositif selon plusieurs des revendications 1 à 10, caractérisé en ce que
l'un ou les deux paliers (11 et 12 d'après la figure 4) comportent respectivement un ou plusieurs joints toriques (33), qui coopèrent avec une ou des surfaces coniques (58) avec un angle α pour immobiliser le carter de variateur (2) à la fois radialement et axialement.

12. Dispositif selon plusieurs des revendications 1 à 11, caractérisé en ce que l'élément de support (35) pour l'un ou les deux paliers (11, 12) comporte un élément élastique en caoutchouc vulcanisé sur des bagues en métal (59 et 60), une bague en métal (59) étant de préférence conique pour l'immobilisation axiale du carter (2) et l'autre bague en tôle (60) étant cylindrique.

13. Dispositif selon plusieurs des revendications 1 à 12, caractérisé en ce que chacun des deux paliers (11 et 12) comporte respectivement un simple joint torique (14 ou 15), un joint torique (15) n'étant pas chargé axialement et l'autre joint torique (14) immobilisant le variateur continu (3) dans les deux directions, à la fois radiale et axiale.

14. Dispositif selon plusieurs des revendications 1 à 13, caractérisé en ce que d'après les figures 9 et 10, un élément de réaction de couple (61; 62) placé et fixé dans le carter de transmission (1) est en prise avec une cavité (63) correspondante du carter de variateur (2) pour fixer le variateur hydrostatique (3) dans le carter (1) en rotation et en direction axiale au moyen d'un élément de caoutchouc (38), de préférence il est prévu deux desdits éléments de réaction de couple (61; 62) répartis uniformément sur la circonférence.

15. Dispositif selon plusieurs des revendications 1 à 14, caractérisé en ce que l'élément de réaction de couple (62) comporte en plus des éléments amortisseurs à friction (48; 64) pressés l'un contre l'autre par la pression de l'élément élastique, au moins un élément de friction (48) étant fixe par rapport au carter de variateur (2) et au moins un élément de friction (64) étant fixe par rapport au carter de transmission (1).

16. Dispositif selon plusieurs des revendications 1 à 15, caractérisé en ce que les éléments de support élastiques (14, 15, 32, 33, 36, 34) sont réalisés de préférence en élastomère présentant un effet d'hystérésis élevé pour augmenter l'effet d'amortissement par friction.

17. Dispositif selon plusieurs des revendications 1 à 16, caractérisé en ce qu'une bague de friction (68) est précontrainte sous une force axiale prédéterminée entre le carter de transmission (1) et le carter de variateur (2) et/ou en ce que la bague de friction (68) est appliquée par une force axiale dépendante du couple du carter de variateur (2), par exemple grâce à l'agencement adéquat de l'élément de réaction de couple (135) ou par une force axiale résultant des éléments du train (10) pour réaliser un amortissement à friction entre le carter de transmission (1) et le carter de variateur dépendant du couple.

18. Dispositif selon plusieurs des revendications 1 à 17, caractérisé en ce que l'amortisseur de torsion (9, 39, 40; 41; 42; 43; 44; 45; 49; 50; 51) est monté à l'extérieur de la transmission (1) et est entraîné par le volant (5) du moteur d'entraînement à travers un amortisseur de torsion (8).

19. Dispositif selon plusieurs des revendications 1 à 18, caractérisé en ce que l'arbre d'entrée (16) du variateur (3) n'est pas en liaison métallique avec l'arbre d'entrée (4) de la transmission, vu que, comme montré sur la figure 14, le moyeu (69) de l'arbre d'entrée (4) entraîne le moyeu (70) de l'arbre d'entrée (16) du variateur à travers un élément élastique, en particulier un élément en caoutchouc (73), l'élément élastique (73) étant un élément en caoutchouc vulcanisé sur les deux flasques (71 et 72) des deux moyeux (69 et 70), ou, en ce que, comme connu en soi, l'élémement élastique (73) est constitué d'un élément de connection amortisseur de torsion placé libre entre les deux éléments d'accouplement (71 et 72).

20. Dispositif selon plusieurs des revendications 1 à 19, caractérisé en ce que l'amortisseur de torsion (9) comporte un volant (6) relié à un membre d'entrée (27) et un second volant (7) relié à un membre de sortie (28), les deux volants (6 et 7) étant accouplés en rotation avec amortissement de vibrations au moyen d'éléments élastiques (22) en particulier en caoutchouc, lesdits éléments de caoutchouc (22) étant cylindriques et positionnés dans des cavités (23) des deux volants concentriques.

21. Dispositif selon plusieurs des revendications 1 à 20, caractérisé en ce que l'amortisseur de torsion (9) comporte des éléments amortisseurs (22) qui coopèrent avec des surfaces fonctionnelles (24) des deux volants (6 et 7), conformées de telle façon que le couple augmente progressivement lors du mouvement de torsion relative entre les deux volants (6 et 7), par exemple au moyen d'éléments amortisseurs (22) cylindriques et de surfaces fonctionnelles (24) des cavités (23) des deux volants (6 et 7) ayant un rayon de courbure R plus grand que le rayon r des éléments amortisseurs (22) cylindriques.

22. Dispositif selon plusieurs des revendications 1 à 21, caractérisé en ce que l'amortisseur de torsion (9) comporte en alternative une bague d'amortissement à friction (29) montée entre un membre d'entrée (27) et un membre de sortie (volant 7) au moyen de la force des ressorts (30) pour assurer un amortissement par friction.

23. Dispositif selon plusieurs des revendications 1 à 22, caractérisé en ce que l'amortisseur de torsion comporte des éléments amortisseurs élastiques (74) qui sont montés libres dans des poches correspondantes embouties dans le membre d'entrée (75) réalisé en tôle et dans le membre de sortie (76) de l'amortisseur de torsion réalisé également en tôle emboutie et en ce qu'un élément de friction (77) placé entre le membre d'entrée (75) et le membre de sortie (76) est comprimé par un ressort conformé en conséquence et en ce que le ressort est réalisé de préférence à partir de matériau plat et est accroché dans des cavités (78) du membre d'entrée (75) et du membre de sortie (76) de l'amortisseur de torsion.

24. Dispositif selon plusieurs des revendications 1 à 23, caractérisé en ce que le membre de sortie (79) de l'amortisseur de torsion (40) relié à l'arbre d'entrée (16) du variateur (3) est vulcanisé sur un volant-couronne (80) au moyen d'un élément intermédiaire en caoutchouc (81), principalement pour réduire les vibrations de flexion résultant du variateur (3) (figure 4).

25. Dispositif selon plusieurs des revendications 1 à 24, caractérisé en ce que ledit amortisseur de torsion (41) comporte un volant (84) supporté par des parties élastiques (88) du membre d'entrée (82) et des parties élastiques (85) du membre de sortie (83), lesdites parties élastiques étant placées de préférence libres dans le volant (84) et dans des dispositifs d'entraînement (87 et 86) du membre d'entrée (82) et du membre de sortie (83) conformés en conséquence, le membre d'entrée (82) et le membre de sortie (83) étant de préférence réalisés en tôle emboutie.

26. Dispositif selon plusieurs des revendications 1 à 25, caractérisé en ce que ledit amortisseur de torsion (42) comporte deux volants-couronnes (91 et 92), le premier volant-couronne étant relié au membre d'entrée (89) au moyen d'un bloc de caoutchouc (53) et le second volant-couronne (92) étant également relié élastiquement au membre de sortie (90) au moyen d'un bloc de caoutchouc (52) et les deux volants (91 et 92) étant reliés en rotation avec amortissement des vibrations à travers des éléments amortisseurs élastiques (53).

27. Dispositif selon plusieurs des revendications 1 à 26, caractérisé en ce que le membre d'entrée (27) et le membre de sortie (28) dudit amortisseur de torsion (9) sont réalisés en tôle emboutie et les volants correspondants (6 et 7) sont reliés par des connections (20 et 21) formées sans enlèvement de copeaux.

28. Dispositif selon plusieurs des revendications 1 à 27, caractérisé en ce que ledit amortisseur de torsion (44) comporte un volant (93) relié au membre de sortie (96) au moyen d'une liaison mécanique fixe et au membre d'entrée (95) par un bloc amortisseur (94) élastique, les membres d'entrée (95) et de sortie (96) étant de préférence réalisés en tôle emboutie.

29. Dispositif selon plusieurs des revendications 1 à 28, caractérisé en ce que ledit amortisseur de torsion (49) est constitué d'un amortisseur visqueux, un élément primaire (97) étant relié à un élément secondaire (98) à travers au moins un élément élastique (100) et une chambre pour le fluide visqueux ou de la matière amortissante (99) et en ce que les éléments primaire (97) et/ou secondaire (98) comportent respectivement des pièces d'amortissement en regard, par exemple des bagues (101, 152) ou des disques d'amortissement.

30. Dispositif selon plusieurs des revendications 1 à 29, caractérisé en ce que l'arbre de sortie (17) du variateur (3) comporte un dispositif amortisseur de torsion (45) tel qu'un découplage des vibrations se produit entre deux parties (102 et 103) de l'arbre de sortie (17) du variateur (3) au moyen d'un élément élastique (18) intercalé, et en ce que ledit élément élastique (18) est vulcanisé entre les deux parties (102 et 103) menantes ou ces éléments (18) sont interposés libres dans des cavités correspondantes ou dans des pièces d'accouplement (104 et 105) formées en conséquence des deux parties menantes (102 et 103) et qu'un dispositif amortisseur non représenté avec des pièces de friction permet de diminuer encore les vibrations.

31. Dispositif selon plusieurs des revendications 1 à 30, caractérisé en ce que l'arbre de sortie (17) du variateur (3) est découplé élastiquement des autres éléments de transmission, à savoir le train sommateur (10), par le fait que le palier axial (106) et le palier radial (47) amortissent les vibrations, en ce qu'au moins un élément intermédiaire (46) isolant les bruits ou élastique est interposé entre les deux disques du palier axial (106) et que le palier radial (47) est de préférence un palier lisse réalisé en matériau amortisseur de bruits ou en matériau composite en couche par exemple une tôle sandwich.

32. Dispositif selon plusieurs des revendications 1 à 31, caractérisé en ce que ledit amortisseur de torsion (9) logé à l'intérieur du carter de transmission (1) est relié en amont à un autre amortisseur de torsion (8) primaire, extérieur à la transmission entre un premier volant (5) monté directement sur le vilebrequin du moteur et l'arbre d'entrée (4).

33. Dispositif selon plusieurs des revendications 1 à 32, caractérisé en ce que le carter (2) du variateur (3) est entouré d'une pièce élastique en tôle, une couronne en tôle (37) qui comporte respectivement sur sa bague extérieure (115) de centrage et sur sa bague intérieure (114) de centrage des pattes d'entraînement (108 ou 110) qui s'engagent dans des encoches (109) du carter (1) et des encoches (111) du carter de variateur (2), pour à la fois supporter radialement et immobiliser en rotation le variateur (3) par rapport au carter (1).

34. Dispositif selon plusieurs des revendications 1 à 33, caractérisé en ce que ladite couronne d'amortissement en tôle (37) comporte de préférence entre les deux bagues de centrage (115 et 114) des nervures (112) obliques alternées pour se tordre élastiquement sous l'effet du couple du carter (2) de variateur.

35. Dispositif selon plusieurs des revendications 1 à 34, caractérisé en ce qu'une couronne de centrage (214) élastique supportant le carter (2) de variateur dans le carter (1) de transmission comporte une bague extérieure en métal (215) et une bague intérieure en métal (220), qui sont assemblées par un élément en caoutchouc (121) vulcanisé et que la bague extérieure (215) et la bague intérieure (220) comportent respectivement des pattes d'entraînement (116 et 119), qui s'engagent dans des encoches (117, 118) du carter de transmission (1) et du carter de variateur (2), pour supporter et immobiliser élastiquement en rotation le variateur (3) par rapport au carter (1).

36. Dispositif selon plusieurs des revendications 1 à 35, caractérisé en ce qu'un élément de support (35) du palier radial du variateur (3) comporte au moins une surface de palier conique ayant de préférence une surface extérieure métallique (157; 59) et que ledit élément support comporte un dispositif de réaction de couple (135 / figure 13) qui génère une force axiale dépendante du couple s'exerçant sur le variateur (3).

37. Dispositif selon plusieurs des revendications 1 à 36, caractérisé en ce que les éléments élastiques sont constitués d'un mélange d'élastomères qui comportent des caractéristiques particulières d'amortissement propre, des duretés différentes et une bonne résistance à l'abrasion.

38. Dispositif selon plusieurs des revendications 1 à 37, caractérisé en ce que les éléments de support élastiques (14; 15; 33; 34; 158) présentent une surface extérieure résistante à l'abrasion ou ayant une usure réduite aux endroits concernés et sont réalisés sous différentes formes dans les sections droites, et/ou en ce que les surfaces de support présentent aux endroits concernés des carters (1 et 2) une surface extérieure résistante à l'abrasion ou ayant une usure réduite au moyen d'un traitement de surface particulier respectivement par un enduit d'une couche lubrifiante et/ou en ce que les éléments de support élastiques ou amortisseurs de vibrations sont plongés dans un lubrifiant adéquat.

39. Dispositif selon plusieurs des revendications 1 à 38, caractérisé en ce que le carter du variateur (2) est recouvert d'une couche anti-bruits.

40. Dispositif selon plusieurs des revendications 1 à 39, caractérisé en ce que l'amortisseur de torsion (8;
9; 39; 40; 42) comporte comme connu en soi des ressorts de compression.

41. Dispositif selon plusieurs des revendications 1 à 40, caractérisé en ce que l'arbre (17) de l'unité secondaire (66) du variateur continu (3) est relié avec une masse d'inertie non représentée au moyen d'éléments intermédiaires élastiques connus en soi.

42. Dispositif selon plusieurs des revendications 1 à 41, caractérisé en ce que l'arbre de sortie (17) du variateur continu (3) est relié avec un membre de transmission (103) entourant le train sommateur (10) à travers des éléments élastiques (18).

43. Dispositif selon plusieurs des revendications 1 à 42, caractérisé en ce que l'amortisseur de torsion (170; 194 figure 17, 18,19) comporte des masses d'inertie (161; 162; 186, 187) comportant respectivement des pattes d'entraînement (176, 175; 182, 183; 184, 188) qui présentent des surfaces inclinées (169; 190; 185; 189) d'un angle β dans la direction circonférentielle pour engendrer une composante de force axiale dépendante du couple lors d'une rotation relative, les éléments amortisseurs élastiques (167; 180) en élastomère ou sous forme de ressorts métalliques étant montés libres ou vulcanisés sur un des deux volants-couronnes (161, 162; 186, 187) ou sont supportés libres dans des logements correspondants entre les deux surfaces inclinées (169; 190; 185; 189) en regard.

44. Dispositif selon plusieurs des revendications 1 à 43, caractérisé en ce que l'amortisseur de torsion (194 d'après la figure 19) comporte des éléments amortisseurs sous la forme de ressorts à boudins (180), lesdits ressorts à boudins s'appuyant sur des pattes d'entraînement (182; 188) d'un premier volant-couronne (186) et sur des pattes d'entraînement (183; 184) d'un second volant-couronne (187) par l'intermédiaire d'éléments guides (179 et 181) et en ce que les pattes d'entraînement (182, 183; 184; 188) présentent des surfaces d'action (185, 178; 189, 190) inclinées en direction circonférentielle qui coopèrent avec des surfaces correspondantes opposées des éléments guides (179; 181), de telle sorte qu'une force du ressort, la composante axiale de la force correspondant au couple agit sur l'un ou les deux volants (186 et 187), directement ou par l'intermédiaire d'une ou de plusieurs bagues de friction supportant les deux volants.

45. Dispositif selon plusieurs des revendications 1 à 44, caractérisé en ce que les pattes d'entraînement (184, 188) et/ou d'autres pièces de l'amortisseur de torsion (170; 191) sont réalisées au moins en partie en tôle emboutie sans usinage et/ou en alliage moulé sous pression et/ou en métal fritté.

46. Dispositif selon plusieurs des revendications 1 à 45, caractérisé en ce que le variateur continu (2) est fixé axialement sur seulement palier (11) dans les deux directions au moyen d'éléments amortisseur (14; 33, 160; 133, 68) et est libre axialement dans les deux directions au niveau de l'autre palier (12).

47. Dispositif selon plusieurs des revendications 1 à 46, caractérisé en ce que les éléments de palier élastiques (14, 15, 32, 33, 35) constituent des paliers radiaux élastiques et des amortisseurs à friction.

48. Dispositif selon plusieurs des revendications 1 à 47, caractérisé en ce que le variateur continu (3) est relié à l'unité de commande et de réglage au moyen de connections hydrauliques rapides isolées phoniquement comprenant des éléments de liaison élastiques particulièrement volumineux, par exemple des joints toriques en caoutchouc et en ce que le dispositif de réglage du variateur (3) est intégré dans le carter de variateur (2).
